(19) **Europäisches Patentamt**
**European Patent Office**
**Office européen des brevets**

(11) **EP 4 418 010 A1**

(12) # EUROPEAN PATENT APPLICATION
published in accordance with Art. 153(4) EPC

(43) Date of publication:
**21.08.2024 Bulletin 2024/34**

(21) Application number: **22880568.5**

(22) Date of filing: **24.05.2022**

(51) International Patent Classification (IPC):
*G01S 13/536* (2006.01)  *G01S 13/89* (2006.01)
*G01S 17/34* (2020.01)  *G01S 17/89* (2020.01)

(52) Cooperative Patent Classification (CPC):
**G01S 13/536; G01S 13/89; G01S 17/34; G01S 17/89**

(86) International application number:
**PCT/JP2022/021170**

(87) International publication number:
**WO 2023/062862 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.10.2021  JP 2021168362**

(71) Applicant: **Panasonic Intellectual Property Management Co., Ltd.**
**Kadoma-shi, Osaka 571-0057 (JP)**

(72) Inventors:
• **HISADA Kazuya**
**Kadoma-shi, Osaka 571-0057 (JP)**
• **KATO Yumiko**
**Kadoma-shi, Osaka 571-0057 (JP)**
• **KIKUCHI Kohei**
**Kadoma-shi, Osaka 571-0057 (JP)**
• **INADA Yasuhisa**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **DATA PROCESSING DEVICE AND DATA PROCESSING METHOD**

(57)  A data processing device includes: a storage device storing measurement data, including position information and velocity information about multiple measurement points in a space; and a processing circuit. The processing circuit acquires the measurement data from the storage device, recognizes measurement points on a stationary object from among the multiple measurement points on the basis of the velocity information, and generates point cloud data including the position information about the measurement points on a stationary object on the basis of a result of the recognition.

FIG. 1

EP 4 418 010 A1

**Description**

Technical Field

The present disclosure relates to a data processing device and a data processing method.

Background Art

The development of moving bodies capable of moving autonomously, such as automated transport robots (autonomous mobile robots (AMRs) or automated guided vehicles (AGVs)), self-driving cars, and autonomous flying drones, has been progressing actively in recent years. These moving bodies move autonomously while performing localization using a sensor such as a light detection and ranging (LiDAR) or image sensor, for example. Localization may be performed by matching sensor data outputted from the sensor with a map of the environment around the moving body. The map is generated using a technology such as simultaneous localization and mapping (SLAM), for example. A moving body that moves automatically using SLAM moves while generating or updating a map on the basis of sensor data outputted sequentially from the sensor while moving. By matching fixed points called landmarks detected using the sensor with corresponding points on the map, such a moving body can move automatically while performing localization and updating the map.

In such a moving body, if a moving object (such as a pedestrian or a traveling vehicle, for example) is present in the environment around the moving body, matching of the sensor data and the map may be unsuccessful or the moving object may be incorrectly recognized as a landmark in some cases. In such cases, localization and mapping fails.

One example of a technology for addressing such problems is disclosed in Patent Literature 1. The device disclosed in Patent Literature 1 detects a moving object in an image by comparing feature points between frames in a time-series image acquired by a camera, and generates a map from which information about the moving object has been removed. This allows for the generation of a map that does not contain information about the moving object.

Meanwhile, the development of FMCW-LiDAR using frequency-modulated continuous wave (FMCW) technology is progressing. FMCW-LiDAR combines a wide dynamic range and high resolution with respect to distance, is highly vibration resistant, and can measure the relative velocity between a sensor and a moving object. Accordingly, FMCW-LiDAR is expected to be used as a sensor for automated driving. An example of FMCW-LiDAR is disclosed in Non-Patent Literature 1, for example.

Citation List

Patent Literature

PTL 1: Japanese Unexamined Patent Application Publication No. 2016-126662 Non Patent Literature
NPL 1: Christopher V. Poulton et al., "Frequency-modulated Continuous-wave LIDAR Module in Silicon Photonics", OFC2016, W4E.3 (2016).

Summary of Invention

Technical Problem

The present disclosure provides a technology for generating point cloud data more efficiently than in the related art, the point cloud data being used in localization, mapping, and the like for a moving body.

Solution to Problem

A data processing device according to one aspect of the present disclosure includes: a storage device storing measurement data, including position information and velocity information about multiple measurement points in a space; and a processing circuit. The processing circuit acquires the measurement data from the storage device, recognizes measurement points on a stationary object from among the multiple measurement points on the basis of the velocity information, and generates point cloud data including the position information about the measurement points on a stationary object on the basis of a result of the recognition.

It should be noted that general or specific embodiments of the present disclosure may be implemented as a system, a device, a method, an integrated circuit, a computer program, a storage medium such as a computer-readable recording disk, or any selective combination thereof. Computer-readable recording media include volatile recording media as well as non-volatile recording media such as Compact Disc - Read-Only Memory (CD-ROM). A device may also include one or more devices. In the case where a device includes two or more devices, the two or more devices may be disposed inside a single piece of equipment or disposed separately in two or more discrete pieces of equipment. In the specification and claims herein, a "device" may not only refer to a single device, but also to a system including a plurality of devices.

Advantageous Effects of Invention

According to an embodiment of the present disclosure, point cloud data can be generated more efficiently than in the related art, the point cloud data being used in localization, mapping, and the like for a moving body.

Brief Description of Drawings

[Fig. 1] Fig. 1 is a block diagram illustrating an example configuration of a system in an exemplary embodiment of the present disclosure.
[Fig. 2] Fig. 2 is a block diagram illustrating an example configuration of a sensor.
[Fig. 3] Fig. 3 is a block diagram illustrating another example configuration of a sensor.
[Fig. 4] Fig. 4 is a block diagram illustrating yet another example configuration of a sensor.
[Fig. 5A] Fig. 5A is a diagram illustrating an example of time variation in the frequencies of reference light, reflected light, and interference light when the distance between a sensor and an object is constant.
[Fig. 5B] Fig. 5B is a diagram illustrating an example of time variation in the frequencies of reference light, reflected light, and interference light when the relative velocity between a sensor and an object is constant.
[Fig. 6] Fig. 6 is a diagram for explaining the relative velocity of an object with respect to a sensor.
[Fig. 7] Fig. 7 is a flowchart illustrating an example of operations executed by a processing circuit.
[Fig. 8A] Fig. 8A is a diagram illustrating an example of the format of measurement data acquired in step S101.
[Fig. 8B] Fig. 8B is a diagram illustrating an example of the format of data acquired in step S102, the data including position information and velocity information about a sensor.
[Fig. 8C] Fig. 8C is a diagram illustrating an example of the data format of four-dimensional point cloud data generated in step S103.
[Fig. 8D] Fig. 8D is a diagram illustrating an example of the data format of three-dimensional point cloud data.
[Fig. 9] Fig. 9 is a diagram illustrating an example of the relationship between the moving velocity V of a sensor, the moving velocity v of an object, and a measured velocity $v_c$.
[Fig. 10] Fig. 10 is a flowchart illustrating an example modification of operations by a processing circuit.
[Fig. 11] Fig. 11 is a flowchart illustrating an example of operations when measuring a neighboring point multiple times.
[Fig. 12A] Fig. 12A is a diagram illustrating an example of the format of point cloud data including information on a flag indicating a velocity-detected point.
[Fig. 12B] Fig. 12B is a diagram illustrating an example of the format of measurement data including information on a flag.
[Fig. 13] Fig. 13 is a block diagram illustrating an example configuration of a self-driving vehicle.
[Fig. 14] Fig. 14 is a flowchart illustrating an example of operations executed by a processing circuit of a self-driving vehicle.
[Fig. 15] Fig. 15 is a flowchart illustrating an example of a process of localization in step S207.
[Fig. 16] Fig. 16 is a block diagram illustrating an example configuration of a robot cleaner.
[Fig. 17] Fig. 17 is a flowchart illustrating an example of operations executed by a processing circuit in a robot cleaner.
[Fig. 18] Fig. 18 is a flowchart illustrating a detailed example of operations in step S306.
[Fig. 19] Fig. 19 is a flowchart illustrating a detailed example of operations in step S307.
[Fig. 20] Fig. 20 is a flowchart illustrating a detailed example of operations in step S301.

Description of Embodiments

The embodiments described hereinafter all illustrate general or specific examples. Features such as numerical values, shapes, materials, structural elements, placement positions and connection states of structural elements, steps, and the ordering of steps indicated in the following embodiments are merely examples, and are not intended to limit the technology of the present disclosure. Among the structural elements in the following embodiments, structural elements that are not described in the independent claim indicating the broadest concept are described as arbitrary or optional structural elements. Each diagram is a schematic diagram, and does not necessarily illustrate a strict representation. Furthermore, in the drawings, substantially identical or similar components are denoted by the same signs. Duplicate description may be omitted or simplified.

In the present disclosure, all or part of the circuits, units, devices, members, or sections, or all or part of the function blocks in the block diagrams, may also be executed by one or multiple electronic circuits, including a semiconductor device, a semiconductor integrated circuit (IC), or a large-scale integration (LSI) chip, for example. An LSI chip or IC may be integrated into a single chip, or may be configured by combining multiple chips. For example, function blocks other than memory elements may be integrated into a single chip. Although referred to as an LSI chip or IC herein, such electronic circuits may also be called a system LSI chip, a very-large-scale integration (VLSI) chip, or an ultra-large-scale integration (ULSI) chip, depending on the degree of integration. A field-programmable gate array (FPGA) programmed after fabrication of the LSI chip, or a reconfigurable logic device in which interconnection relationships inside the LSI chip may be reconfigured or in which circuit demarcations inside the LSI chip may be set up, may also be used for the same purpose.

Furthermore, the function or operation of all or part of a circuit, unit, device, member, or section may also be executed by software processing. In this case, the software is recorded onto a non-transitory recording medium, such as one or multiple ROM modules, optical discs, or hard disk drives, and when the software is executed by a processor, the function specified by the software is executed by the processor and peripheral devices. A system or device may also be provided with one or multiple non-transitory recording media on which the software is recorded, a processor, and necessary hardware devices, such as an interface, for example.

(Underlying Knowledge Forming Basis of the Present Disclosure)

Before describing an embodiment of the present disclosure, the underlying knowledge forming the basis of the present disclosure will be described.

According to the technology disclosed in Patent Literature 1, by removing information about a moving object from a time-series image acquired by a camera, a map that does not contain information about the moving object can be generated. Removing information about a moving object from map data to be used for localization in this way is highly effective. However, methods using a camera as in Patent Literature 1 have the following issues.

A first issue is that extracting feature points from an image and calculating optical flows (that is, motion vectors) of feature points between frames is costly in terms of signal processing and lengthy in terms of processing time. As high signal processing performance is required, the length of the processing time may be fatal in situations where processing is demanded in a short time, such as for localization during self-driving.

A second issue is that feature points cannot be extracted in some situations. For example, feature point extraction from an image is difficult at short distances in particular, such as from the side of a large truck, and it cannot be determined whether the image is of a moving object or not.

A third issue is the uncertainty of information obtained from a camera. Information obtained with a camera is highly susceptible to the effects of the brightness and the like of the surrounding environment, such as the lighting environment when indoors, or the way the sun is shining or the weather when outdoors. Accordingly, obtaining consistent information is difficult, even when the situation is the same.

Based on the above considerations, the inventors have conceived of the configuration of an embodiment of the present disclosure described below. Hereinafter, an overview of an embodiment of the present disclosure will be described.

A data processing device according to an exemplary embodiment of the present disclosure is provided with a storage device and a processing circuit. The storage device stores measurement data, including position information and velocity information about multiple measurement points in a space. The processing circuit acquires the measurement data from the storage device, recognizes measurement points on a stationary object from among the multiple measurement points on the basis of the velocity information, and generates point cloud data including the position information about the measurement points on a stationary object on the basis of a result of the recognition.

According to the above configuration, the measurement data includes velocity information in addition to position information about multiple measurement points. This allows the processing circuit to recognize measurement points on a stationary object from among the multiple measurement points on the basis of the velocity information. The processing circuit generates point cloud data, including the position information about the measurement points on a stationary object, on the basis of a result of the recognition. For example, the processing circuit can generate point cloud data from which information about a moving object has been removed, or point cloud data including a flag or other information for distinguishing between a moving object and a stationary object. This arrangement allows for efficient generation of point cloud data which may be used for localization or for generating or updating a map.

The measurement data including position information and velocity information about multiple measurement points in a space may be generated by a sensor capable of acquiring velocity information about measurement points, such as a LiDAR sensor of the FMCW method or a radar, for example. Such a sensor can measure the distance from the sensor to a measurement point and a velocity component of the measurement point in the direction heading toward the sensor. The "position information" for a measurement point in the measurement data is not limited to information such as coordinate values that directly represent the position of the measurement point. The position information about a measurement point may also be information to be used to calculate the position of the measurement point, such as information indicating the distance and direction from the sensor to the measurement point. The "velocity information" for a measurement point in the present disclosure is not limited to information indicating the absolute velocity of the measurement point, and may also be information related to the velocity. For example, the velocity information about a measurement point may also be information indicating a velocity component of the measurement point in the direction along a straight line connecting the sensor and the measurement point. Alternatively, the velocity information about a measurement point may be information indicating whether or not the magnitude of the velocity measured at the measurement point is greater than a threshold value. The measurement data is not limited to being the sensor data itself that is outputted from the sensor, and may also be data generated on the basis of the sensor data. For example, data generated on the basis of the sensor data by the processing circuit or another device may be obtained as the measurement data.

According to the above configuration, by using an active device such as a LiDAR sensor or a radar that itself emits electromagnetic waves such as light or radio waves, consistent measurement data can be acquired. Furthermore, each measurement point can be recognized quickly as a point on a stationary object or not and point cloud data reflecting the recognition results can be generated, without performing processing to calculate the optical flows of feature points extracted from a time-series image as disclosed in Patent Literature 1.

The processing circuit may also generate the point cloud data by excluding, from the measurement data, information pertaining to measurement points other than recognized measurement points on a stationary object. Alternatively, the processing circuit may generate the point cloud data through processing in which, from among the multiple measurement points in the measurement data, the recognized measurement points on a stationary object are assigned a flag indicating a stationary object. Conversely, the processing circuit may generate the point cloud data through processing in which, from among the multiple measurement points in the measurement data, measurement points excluding the recognized measurement points on a stationary object are assigned a flag indicating a moving object. By generating point cloud data by such methods, map data from which information pertaining to a moving object has been removed can be generated easily on the basis of the point cloud data. As a result, it is possible to perform localization or the generating or updating of a map based on point cloud data, without being influenced by a moving object.

The position information about the multiple measurement points in the measurement data may include three-dimensional coordinate values for each of the multiple measurement points. In this case, the point cloud data may be three-dimensional point cloud data including the three-dimensional coordinate values for each of the measurement points on a stationary object. Alternatively, the position information about the multiple measurement points in the measurement data may include two-dimensional coordinate values for each of the multiple measurement points. In this case, the point cloud data may be two-dimensional point cloud data including the two-dimensional coordinate values for each of the measurement points on a stationary object. In this way, the position information about each measurement point in the measurement data and the point cloud data may be expressed by three-dimensional coordinates or two-dimensional coordinates.

The storage device may store the measurement data for each of multiple frames. The measurement data for each frame may include the position information and the velocity information about multiple measurement points in the space. In the present disclosure, a "frame" means a single bundle of data outputted from the sensor. As an example, the sensor may repeatedly output measurement data, including a measurement time, position information, and velocity information about each point, at a frame rate that is fixed, for instance. The sensor may output one time in association with one frame of measurement data, or output one time in association with each measurement point.

The velocity information about the multiple measurement points in the measurement data may include first velocity information and second velocity information acquired by measuring at different measurement angles. The processing circuit may recognize the measurement points on a stationary object on the basis of the first velocity information and the second velocity information. Some measurement points may be moving parallel to the sensor, and in such cases, a sensor of the FMCW method is unable to measure the velocity of the measurement point. In consideration of such cases, the sensor may output measurement data with the inclusion of two or more pieces of velocity information obtained by measuring the same or a nearby measurement point two or more times at different measurement angles. This allows for more accurate recognition of measurement points on a moving object and measurement points on a stationary object.

In the measurement data, the number of measurement points with the velocity information may be the same as, or different from, the number of measurement points with the position information. Depending on the measurement point, only position information may be obtained, and velocity information may not be obtained due to error. In this case, the number of measurement points with velocity information is less than the number of measurement points with position information.

As above, the measurement data may be sensor data outputted from a sensor using FMCW, or data generated on the basis of the sensor data. By using FMCW, velocity information about measurement points can be acquired. This allows the processing circuit to perform the recognition of measurement points on a stationary object and measurement points on a moving object on the basis of the velocity information in a short time.

The sensor may be a LiDAR sensor of the FMCW method, for example. In this case, the velocity information about the multiple measurement points may include information indicating a velocity component of the relative velocity of each of the multiple measurement points with respect to the sensor, the velocity component being the component in the direction along a straight line connecting the sensor and each of the multiple measurement points. The processing circuit may recognize, from among the multiple measurement points, measurement points for which the magnitude of the velocity component is less than or equal to a threshold value as the measurement points on a stationary object. The threshold value may be set to zero (0) or a positive value close to zero, for example.

Alternatively, the velocity information about the multiple measurement points may include a flag indicating, for each of the multiple points, whether or not a velocity component of the relative velocity of each of the multiple measurement points with respect to the sensor is greater than a threshold value, the velocity component being the component in the direction along a straight line connecting the sensor and each of the multiple measurement points. The processing circuit may recognize the measurement points on a stationary object from among the plurality of measurement points on the basis of the flag.

The processing circuit may match the point cloud data with map data of an environment sensed by the sensor to thereby determine whether the map data needs to be updated, and if updating is necessary, the processing circuit may update the map data on the basis of the point cloud data. With this arrangement, the map data of the surrounding environment can be updated sequentially while a moving body equipped with the sensor moves, for example.

The processing circuit may acquire map data of an environment sensed by the sensor and match the point cloud data with the map data to thereby estimate the position and/or orientation of the sensor. This allows for localization of a moving body equipped with the sensor, for example, and a moving body that moves autonomously can be attained.

After recognizing the measurement points on a moving object from among the multiple measurement points, the processing circuit may cause the sensor to remeasure the measurement points on a moving object. This allows for the acquisition or more detailed information pertaining to a moving object, and an assessment such as whether it is necessary to avoid the moving object can be made more effectively.

A system according to another embodiment of the present disclosure is provided with the data processing device according to any of the above and a sensor that generates the measurement data or data for generating the measurement data. The sensor may be a LiDAR sensor of the FMCW method or a radar.

A data processing method according to yet another embodiment of the present disclosure is executed by a computer and includes: acquiring measurement data, including position information and velocity information about multiple measurement points in a space; recognizing measurement points on a stationary object from among the multiple measurement points on the basis of the velocity information; and generating point cloud data including the position information about the measurement points on a stationary object on the basis of a result of the recognition.

A computer program according to yet another embodiment of the present disclosure is stored in a non-transitory computer-readable storage medium and causes a computer to execute: acquiring measurement data, including position information and velocity information about multiple measurement points in a space; recognizing measurement points on a stationary object from among the multiple measurement points on the basis of the velocity information; and generating point cloud data including the position information about the measurement points on a stationary object on the basis of a result of the recognition.

Hereinafter, exemplary embodiments of the present disclosure will be described in further detail and with reference to the drawings. However, a description that is more detailed than necessary may be omitted in some cases. For example, a detailed description of matter that is already well-known may be omitted, and a duplicate description may be omitted for configurations which are substantially the same. This is to keep the following description from becoming unnecessarily verbose, and to make the description easy to understand for a person skilled in the art.

Note that the inventors provide the attached drawings and the following description to enable a person skilled in the art to sufficiently understand the present disclosure, and these drawings and description are not intended to limit the subject matter of the claims.

(Embodiment)

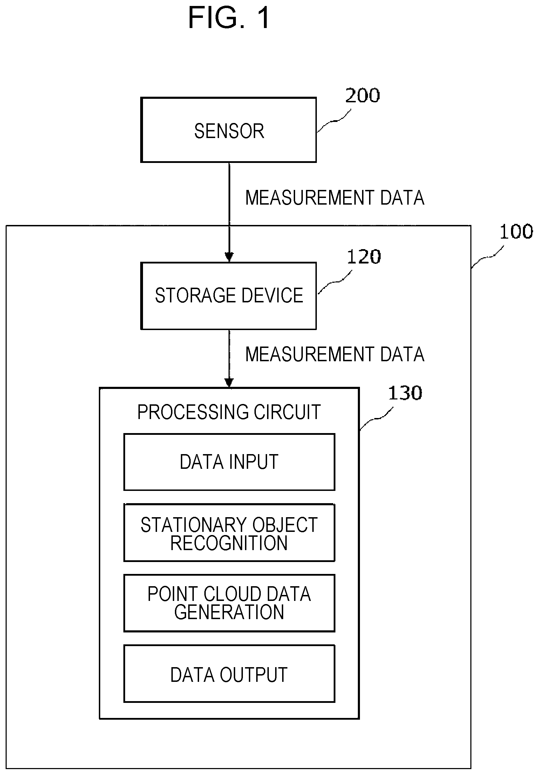

Fig. 1 is a block diagram illustrating an example configuration of a system in an exemplary embodiment of the present disclosure. The system is provided with a sensor 200 and a data processing device 100. The data processing device 100 is provided with a storage device 120 and a processing circuit 130.

The sensor 200 is a measurement device capable of acquiring position information and velocity information about multiple measurement points. The sensor 200 may be LiDAR sensor that measures distance and velocity by using FMCW technology, for example. The sensor 200 is not limited to a LiDAR sensor and may be another type of sensor, such as a radar. The sensor 200 generates measurement data, including position information and velocity information about multiple measurement points in a space, and stores the measurement data in the storage device 120. Unless specifically noted otherwise, the description below assumes that the sensor 200 is a LiDAR sensor of the FMCW method (hereinafter also referred to as "FMCW-LiDAR").

The storage device 120 may be semiconductor memory such as static random access memory (SRAM) or dynamic random access memory (DRAM), for example. The storage device 120 may be another type of storage device, such as a magnetic storage device or an optical storage device. The storage device 120 stores measurement data outputted from the sensor 200. The storage device 120 additionally stores a computer program to be executed by the processing circuit 130.

The processing circuit 130 is an electronic circuit, including a processor such as a central processing unit (CPU) or a graphics processing unit (GPU), for example. The processing circuit 130 may be a collection of multiple processors. The processing circuit 130 operates by executing a computer program stored in the storage device 120. The processing circuit 130 performs the following processes.

- Data input: acquiring measurement data from the storage device 120.
- Stationary object recognition: recognizing measurement points on a stationary object from multiple measurement points on the basis of the velocity information about each of the measurement points in the measurement data.
- Point cloud generation: generating point cloud data, including position information about each of the recognized measurement points on a stationary object.
- Data output: outputting generated point cloud data.

Through the above processes, point cloud data can be generated efficiently in a shorter time and more accurately than in the related art, the point cloud data being used in localization of a moving body and the generating or updating of map data (hereinafter also simply referred to as a "map"), for example. When point cloud data is generated using a sensor incapable of acquiring velocity information, the point cloud data includes information about measurement points on a moving object passing through temporarily. In this case, it is expected that localization or the generating or updating of a map will not be performed accurately. In the present embodiment, this issue is addressed by using the sensor 200, which is capable of acquiring velocity information.

Hereinafter, a configuration and operations of the system in the present embodiment will be described in further detail.

[1. Example configuration of sensor]

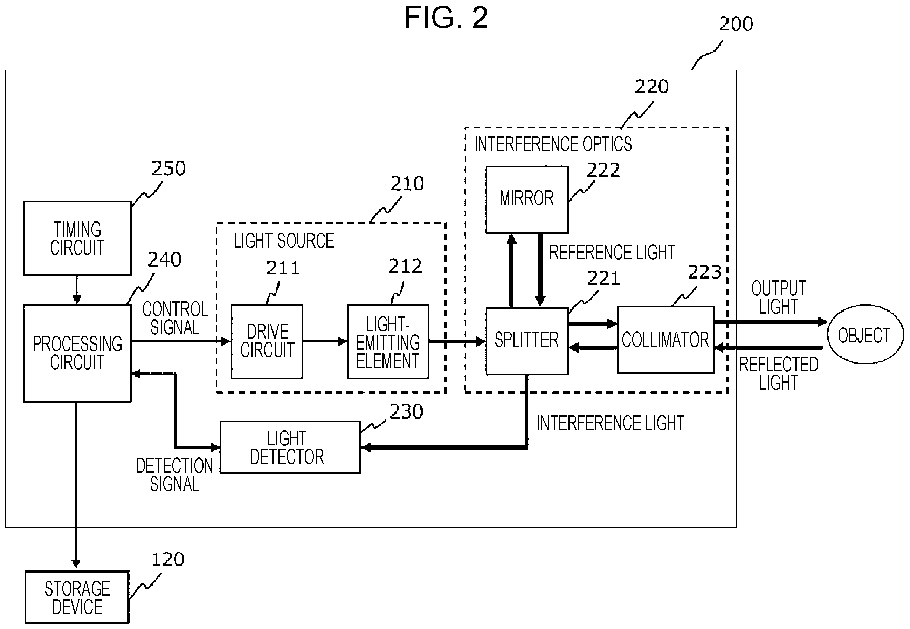

Fig. 2 is a block diagram illustrating an example configuration of the sensor 200. In Fig. 2, thick arrows represent the flow of light, and thin arrows represents the flow of signals or data. Fig. 2 also illustrates an object, which is an object of which the distance and velocity is to be measured, and the storage device 120, which is connected to the sensor 200. The object may be a moving body such as an automobile or a two-wheeled vehicle, for example.

The sensor 200 illustrated in Fig. 2 is provided with a light source 210, interference optics, a light detector 230, a processing circuit 240, and a timing circuit 250. The light source 210 can vary the frequency or the wavelength of light to be emitted in response to a control signal outputted from the processing circuit 240. The interference optics 220 separates emitted light from the light source 210 into reference light and output light, and generates interference light by interfering the reference light with reflected light generated when the output light is reflected by the object. The interference light enters the light detector 230.

The light detector 230 receives the interference light, and generates and outputs an electrical signal according to the intensity of the interference light. This electrical signal is called the "detection signal". The light detector 230 is provided with one or more light-receiving elements. The light-receiving elements include photoelectric transducers such as photodiodes, for example. The light detector 230 may be a sensor in which multiple light-receiving elements are arranged two-dimensionally, like an image sensor, for example.

The processing circuit 240 is an electronic circuit that controls the light source 210 to perform processing based on the detection signal outputted from the light detector 230. The processing circuit 240 may include a control circuit that controls the light source 210 and a signal processing circuit that performs signal processing based on the detection signal. The processing circuit 240 may be configured as a single circuit, or may be a collection of multiple discrete circuits. The processing circuit 240 sends a control signal to the light source 210. The control signal causes the light source 210 to periodically vary the frequency of the emitted light within a predetermined range. Additionally, the processing circuit 240 calculates the distance to each measurement point and the velocity of each measurement point on the basis of the detection signal outputted from the light detector 230. The processing circuit 240 outputs measurement data in association with time information outputted from the timing circuit 250 and information about the calculated distances and velocities. The timing circuit 250 is a circuit with the functions of a clock, such as a real-time clock (RTC), for example.

The light source 210 in this example is provided with a drive circuit 211 and a light-emitting element 212. The drive circuit 211 accepts the control signal outputted from the processing circuit 240, generates a drive current signal according to the control signal, and inputs the drive current signal into the light-emitting element 212. The light-emitting element 212 may be an element that emits highly coherent laser light, such as a semiconductor laser element, for example. The light-emitting element 212 emits frequency-modulated laser light in response to the drive current signal.

The frequency of the laser light emitted from the light-emitting element 212 is modulated on a fixed period. The frequency modulation period may be equal to or greater than 1 microsecond ($\mu$s) and less than or equal to 10 milliseconds (ms), for example. The frequency modulation amplitude may be equal to or greater than 100 MHz and less than or equal to 1 THz, for example. The wavelength of the laser light may be included in the near-infrared wavelength region equal to or greater than 700 nm and less than or equal to 2000 nm, for example. In sunlight, the amount of near-infrared light is less than the amount of visible light. Accordingly, by using near-infrared light as the laser light, the influence of sunlight can be reduced. Depending on the application, the wavelength of the laser light may be included in the visible light wavelength region equal to or greater than 400 nm and less than or equal to 700 nm, or included in the ultraviolet wavelength region.

The control signal inputted into the drive circuit 211 from the processing circuit 240 is a signal of which the voltage varies with a predetermined period and a predetermined amplitude. The voltage of the control signal may be modulated in a triangular waveform or a sawtooth waveform, for example. With a control signal having a voltage that varies linearly, as in a triangular wave or a sawtooth wave, the frequency of light emitted from the light-emitting element 212 can be swept in a near-linear form.

The interference optics 220 in the example illustrated in Fig. 2 include a splitter 221, a mirror 222, and a collimator 223. The splitter 221 divides laser light emitted from the light-emitting element 212 of the light source 210 into reference light and output light, and generates interference light by combining the reference light with reflected light from the object. The mirror 222 reflects the reference light back to the splitter 221. The collimator 223 includes a collimating lens and emits the output light toward the object at a near-parallel spread angle.

The interference optics 220 are not limited to the configuration illustrated in Fig. 2 and may also be fiber optics, for example. In this case, a fiber coupler may be used as the splitter 221. The reference light does not necessarily have to be reflected by the mirror 222, and the reference light may also be returned to the splitter 221 by drawing an optical fiber, for example.

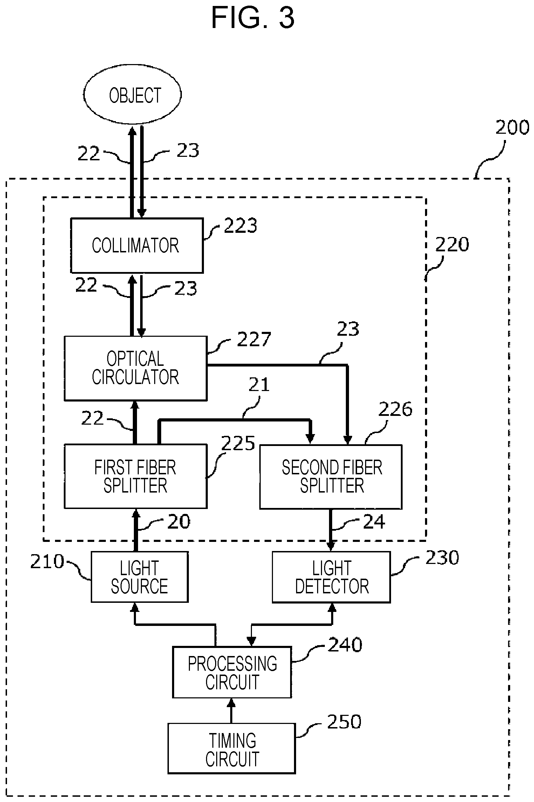

Fig. 3 is a block diagram illustrating an example configuration of the sensor 200 in which the interference optics 220 are fiber optics. In the example illustrated in Fig. 3, the interference optics 220 include a first fiber splitter 225, a second fiber splitter 226, and an optical circulator 227. The first fiber splitter 225 separates laser light 20 emitted from the light source 210 into reference light 21 and output light 22. The first fiber splitter 225 causes the reference light 21 to enter the second fiber splitter 226 and causes the output light 22 to enter the optical circulator 227. The optical circulator 227 causes the output light 22 to enter the collimator 223. The optical circulator 227 also causes reflected light 23, which is generated by emitting the output light 22 toward an object, to enter the second fiber splitter 226. The second fiber splitter 226 causes the interference light 24 of the reference light 21 and the reflected light 23 to enter the light detector 230. The collimator 223 shapes the beam shape of the output light 22 and emits the output light 22 toward the object. Such a configuration likewise enables distance and velocity measurement of the object, similarly to the configuration illustrated in Fig. 2.

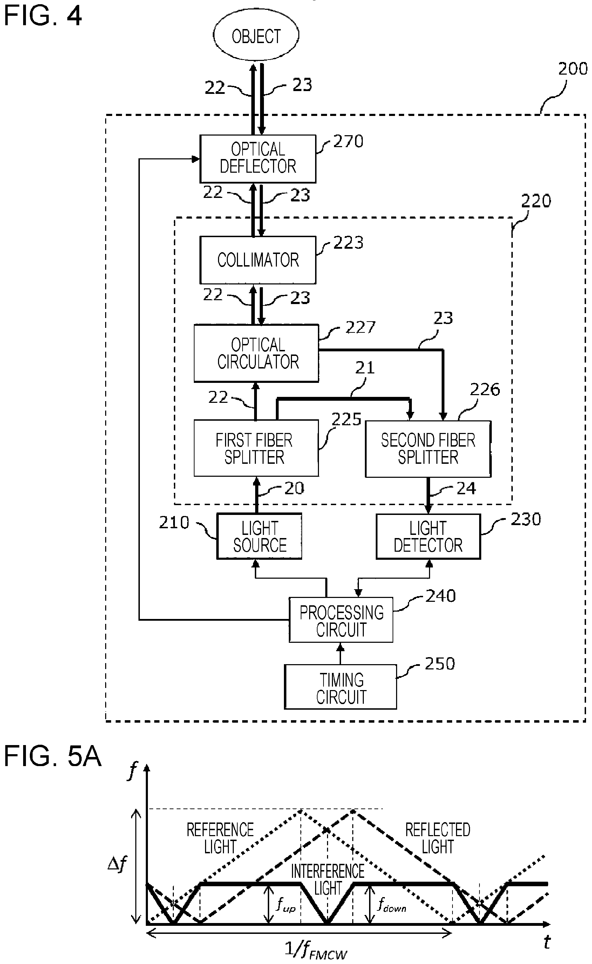

The sensor 200 may be further provided with a scanning mechanism such as an optical deflector to vary the direction of emitted light. Fig. 4 is a block diagram illustrating an example of the sensor 200 provided with an optical deflector 270. The optical deflector 270 may include a micro-electromechanical system (MEMS) mirror or a galvo mirror, for example. The optical deflector 270 can vary the emission direction of the output light 22 by varying the angle of a mirror according to a command from the processing circuit 240. With this arrangement, distance measurement over a wide range can be achieved with beam scanning.

In the example illustrated in Fig. 4, the optical deflector 270 is added to the configuration illustrated in Fig. 3, but a configuration may also be adopted such that the optical deflector 270 is added to the configuration illustrated in Fig. 2. The optical deflector 270 is not limited to the above configuration, and may also be a beam scanning device using an optical phased array and a slow light waveguide as described in International Publication No. WO 2019/230720, for example.

[2. Example of measurement data]

The following describes distance and velocity measurement by an FMCW-LiDAR used in the present embodiment. Distance and velocity measurement according to the FMCW-LiDAR method is performed on the basis of the frequency of interference light generated by the interference of frequency-modulated reference light and reflected light.

Fig. 5A illustrates an example of time variation in the frequencies of reference light, reflected light, and interference light when the distance between the sensor 200 and an object is constant (for example, the case in which both are stationary). The following describes an example in which the frequency f of emitted light from the light source 210 is varied in a triangular waveform, with the rate of frequency variation per unit time being the same in the period of increasing frequency and the period of decreasing frequency. In the following description, the period of increasing frequency is called the "up-chirp period", and the period of decreasing frequency as time elapses is called the "down-chirp period". In Fig. 5A, the dotted line represents the reference light, the dashed line represents the reflected light, and the thick solid line represents the interference light. The reflected light from the object has a distance-dependent time delay with respect to the reference light. Accordingly, a constant, distance-dependent difference is created between the frequency of the reflected light and the frequency of the reference light, except for immediately after the turnaround point of the frequency modulation. The interference light has a frequency corresponding to the frequency difference between the reference light and the reflected light. Thus, the frequency $f_{up}$ of the interference light in the up-chirp period and the frequency $f_{down}$ of the interference light in the down-chirp period are equal, except for immediately after the turnaround point of the frequency modulation. The light detector 230 outputs a detection signal indicating the intensity of the interference light. This detection signal is called the beat signal, and the frequency of the beat signal is called the beat frequency. The beat frequency is equal to the frequency difference between the reference light and the reflected light. This frequency difference depends on the distance from the sensor 200 to the object. Thus, the distance from the sensor 200 to the object can be calculated on the basis of the beat frequency.

Let c be the speed of light, let $f_{FMCW}$ be the modulation frequency of the emitted light, let $\Delta f$ be the width of frequency modulation (that is, the difference between the maximum frequency and the minimum frequency) of the emitted light, let $f_b$ (=$f_{up}$=$f_{down}$) be the beat frequency, and let d be the distance from the sensor 200 to the object. The modulation frequency $f_{FMCW}$ is the reciprocal of the period of frequency modulation of the emitted light. The distance d can be calculated on the basis of the following formula (1).

$$(1): d = c \times f_b / (\Delta f \times f_{FMCW}) \times (1 / 4)$$

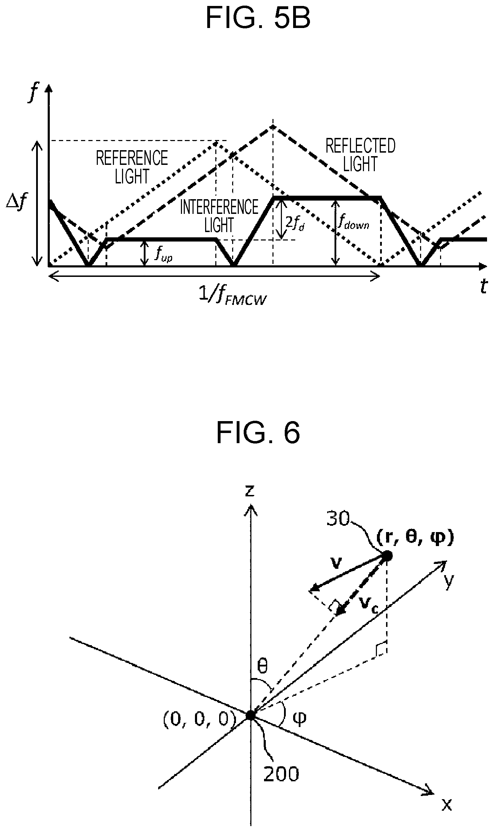

Fig. 5B illustrates an example of time variation in the frequencies of reference light, reflected light, and interference light when at least one of the sensor 200 or the object is moving, and the relative velocity between the sensor 200 and the object is constant. In the example in Fig. 5B, the object is approaching the sensor 200 at a constant velocity. Due to the Doppler effect, a frequency shift occurs between the reference light and the reflected light from the object. When the object is approaching, the frequency of the reflected light increases compared to when the object is stationary. The amount of frequency shift in the reflected light depends on the magnitude of the component of the relative velocity of the object with respect to the sensor 200 in the direction along a straight line connecting the sensor 200 and the measurement point. The beat frequency in this case is different in the up-chirp and down-chirp periods. The velocity of the object can be calculated on the basis of the difference between these beat frequencies. In the example in Fig. 5B, the beat frequency $f_{down}$ in the down-chirp period is higher than the beat frequency $f_{up}$ in the up-chirp period. Conversely, when the object is moving away from the sensor 200, the frequency of the reflected light decreases compared to when the object is stationary. In this case, the beat frequency $f_{down}$ in the down-chirp period is lower than the beat frequency $f_{up}$ in the up-chirp period. In this case, too, the velocity of the object can be calculated on the basis of the difference between these beat frequencies.

Let $v_c$ be the component of the relative velocity of the object with respect to the sensor 200 in the direction along a straight line connecting the sensor 200 and the measurement point, let $\lambda$ be the wavelength of the emitted light, and let $f_d$ be the amount of frequency shift due to the Doppler effect. The amount $f_d$ of frequency shift is expressed by $f_d = (f_{down} - f_{up}) / 2$. In this case, the velocity component $v_c$ can be calculated on the basis of the following formula.

$$(2): v_c = f_d \lambda / 2 = (f_{down} - f_{up})\lambda / 4$$

A positive $v_c$ indicates that the object is moving in a direction going toward the sensor 200. Conversely, a negative $v_c$ indicates that the object is moving in a direction going away from the sensor 200. Contrary to this example, the velocity component $v_c$ may also be defined such that $v_c$ is negative when the object is moving in a direction going toward the sensor 200 and $v_c$ is positive when the object is moving in a direction going away from the sensor 200.

When the object is moving with respect to the sensor 200, the distance d can be calculated on the basis of the following formula (3).

$$(3): d = c \times ((f_{up} + f_{down}) / 2) / (\Delta f \times f_{FMCW}) \times (1 / 4)$$

In this way, through computation based on the detection signal, the processing circuit 240 can obtain the distance from the sensor 200 to the measurement point and the component of the relative velocity of the measurement point with respect to the sensor 200 in the direction along a straight line connecting the sensor 200 and the measurement point.

To determine the above beat frequencies $f_{up}$ and down, the processing circuit 240 performs the following process, for example. The processing circuit 240 sequentially calculates a power spectrum indicating the signal intensity at each frequency by applying a fast Fourier transform to the detection signal outputted from the light detector 230. The processing circuit 240 determines the beat frequency $f_{up}$ to be the peak frequency having a signal intensity exceeding a predetermined threshold value from the power spectrum for up-chirp. Similarly, the processing circuit 240 determines the beat frequency $f_{down}$ to be the peak frequency having a signal intensity exceeding a threshold value from the power spectrum for down-chirp. Note that in the absence of a peak exceeding the predetermined threshold value in at least one of the up-chirp or the down-chirp, the processing circuit 240 may perform error processing without calculating velocity.

Fig. 6 is a diagram for explaining the relative velocity of an object with respect to the sensor 200. In Fig. 6, the position of a measurement point 30 on the object is represented by the coordinates $(r, \theta, \phi)$ in a polar coordinate system with the position of the sensor 200 set to the origin (0, 0, 0). Let v be the actual relative velocity vector of the measurement point 30 with respect to the sensor 200. The velocity measured by the sensor 200 of the FMCW method is not the actual relative velocity vector v, but rather the component $v_c$ obtained by projecting the relative velocity vector v onto a straight line connecting the sensor 200 and the measurement point 30. When the relative velocity is maintained as illustrated in Fig. 6, the Doppler effect occurs, and the relationship between the frequency of the reference light and the frequency of the reflected light is like the relationship illustrated in Fig. 5B. The frequency of the reflected light is shifted according to the velocity component $v_c$ with respect to the frequency of the reference light. Accordingly, a frequency difference is created between the up-chirp and down-chirp periods. The relative velocity component $v_c$ between the sensor 200 and the measurement point 30 can be obtained on the basis of this frequency difference.

In this way, the relative velocity measured in a LiDAR of the FMCW method is the velocity component on a straight line connecting the sensor 200 and the measurement point 30. Therefore, even if the movement direction of the measurement point 30 is different from the direction along the straight line as seen from the sensor 200, only the component of the velocity vector of the measurement point 30 in the direction along the straight line is measured as the relative velocity.

[3. Operations by data processing device]

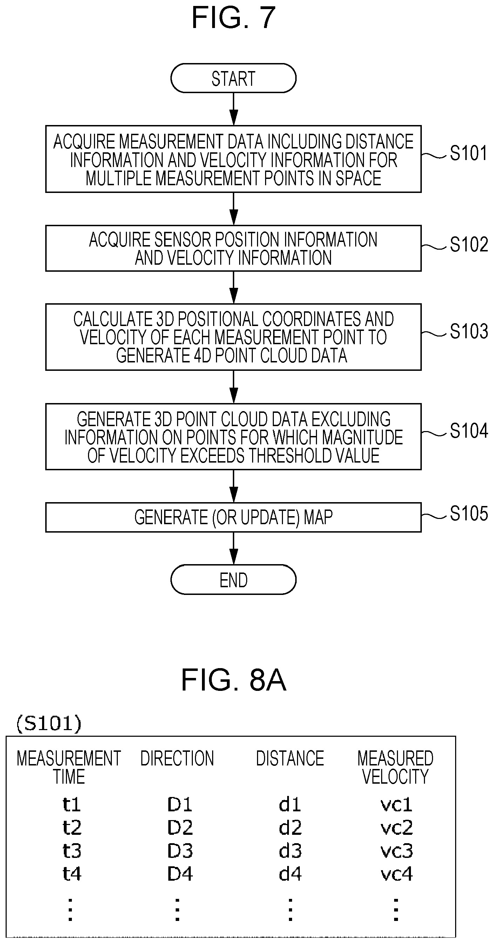

Next, operations by the data processing device 100 will be described in further detail and with reference to Fig. 7. The following describes an example of a case in which the processing circuit 130 generates three-dimensional (3D) point cloud data. The processing circuit 130 is not limited to generating three-dimensional point cloud data, and may also generate two-dimensional (2D) point cloud data, for example.

Fig. 7 is a flowchart illustrating an example of operations executed by the processing circuit 130. In this example, the sensor 200 is installed in a moving body that moves automatically. The moving body herein is described as being a self-driving car. The moving body may be another type of moving body, such as an automated transport robot or an autonomous flying drone. The sensor 200 senses the surrounding environment of the moving body as the moving body moves, sequentially generates measurement data, including position information and velocity information about multiple measurement points, and stores the measurement data in the storage device 120. The processing circuit 130 generates or updates a map of the surrounding environment of the moving body by repeating the operations from step S101 to step S105 illustrated in Fig. 7. The map may be used for localization or route planning of the moving body. The following describes the operations in each step.

In step S101, the processing circuit 130 acquires measurement data from the storage device 120. The measurement data includes information about distance and velocity for multiple measurement points in a space, the information having been measured by the sensor 200 within a fixed time. The sensor 200 repeats the operations of generating and outputting measurement data, including position information and velocity information about multiple measurement points measured within the fixed time, as the measurement data of a single frame. The processing circuit 130 processes the measurement data frame by frame, for example.

Fig. 8A is a diagram illustrating an example of the format of measurement data acquired in step S101. The measurement data in this example includes, for each measurement point, information about the measurement time, the direction of the measurement point with respect to the sensor 200, the distance from the sensor 200 to the measurement point, and the velocity of the measurement point (hereinafter referred to as the "measured velocity"). The direction of each measurement point may be expressed by a vector indicating the direction from the sensor 200 to the measurement point, or by the combination of an elevation angle (or depression angle) and an azimuthal angle. From the information about the direction and distance from the sensor 200 to the measurement point, the relative position of the measurement point with respect to the sensor 200 is identified. From the relative position and the separately measured or estimated position of the sensor 200, the positional coordinates of the measurement point can be calculated. In the present embodiment, the combination of information about the direction and distance of each measurement point corresponds to "position information" for the measurement point. The measured velocity of each measurement point indicates the component of the relative velocity of the measurement point with respect to the sensor 200 in the direction along a straight line connecting the sensor 200 and the measurement point. In the present embodiment, the measured velocity corresponds to "velocity information" for the measurement point.

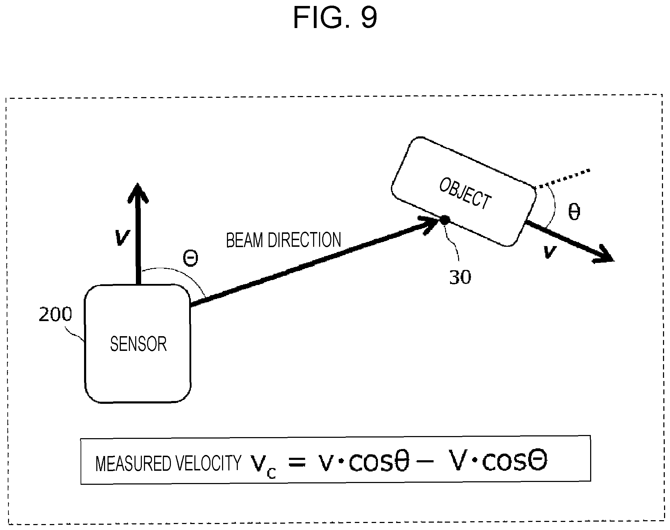

The following describes the relationship between the actual velocity and the measured velocity of a measurement point, with reference to Fig. 9. Fig. 9 is a diagram illustrating an example of the relationship between the moving velocity V of the sensor 200, the moving velocity v of an object, and the measured velocity $v_c$. In the example illustrated in Fig. 9, let $\Theta$ be the angle between the moving velocity V of the sensor 200 and the direction of a laser beam emitted from the sensor 200 toward a measurement point 30 on the object. Also, let $\theta$ be the angle between the moving velocity v of the object and the direction of the beam. The measured velocity $v_c$ of the measurement point 30 measured by the sensor 200 is expressed by the following formula (4).

$$(4): v_c = v \cdot \cos \theta - V \cdot \cos \Theta$$

In this example, the measured velocity $v_c$ takes a positive value when the sensor 200 and the measurement point 30 are moving away from each other, and the measured velocity $v_c$ takes a negative value when the sensor 200 and the measurement point 30 are moving toward each other. Contrary to this example, the sensor 200 may also be configured such that the measured velocity $v_c$ takes a positive value when the sensor 200 and the measurement point 30 are moving toward each other, and the measured velocity $v_c$ takes a negative value when the sensor 200 and the measurement point 30 are moving away from each other. In this case, the measured velocity $v_c$ is expressed by the following formula (5).

$$(5): v_c = V \cdot \cos \Theta - V \cdot \cos \theta$$

Fig. 7 will be referenced again. In step S102, the processing circuit 130 acquires position information and velocity information about the sensor 200. The position information and velocity information about the sensor 200 may be generated by an onboard computer such as an electronic control unit (ECU) installed in the moving body, for example. The onboard computer can calculate or estimate the position and velocity of the moving body and the sensor 200 on the basis of data acquired from any of various devices installed in the moving body, such as a global navigation satellite system (GNSS) receiver, an inertial measurement unit (IMU), and a speedometer. The position of the sensor 200 may be estimated by matching a pre-created map with point cloud data based on measurement data. The velocity of the sensor 200 may be measured on the basis of data outputted from a speedometer or from an accelerometer, gyroscope, or the like included in the IMU. In the case in which the moving body is a vehicle, the velocity may be calculated on the basis of the rotational velocity of the wheels measured by a wheel sensor, the diameter of the wheels, and information about the direction of steering. Alternatively, the velocity may be measured by irradiating a stationary object such as the ground using the sensor 200 or other FMCW-LiDAR. The position and velocity of the sensor 200 are sequentially recorded in the storage device 120. The processing circuit 130 acquires position information and velocity information about the sensor 200 from the storage device 120. Note that the operations in step S102 may also be performed before step S101 or in parallel with step S101.

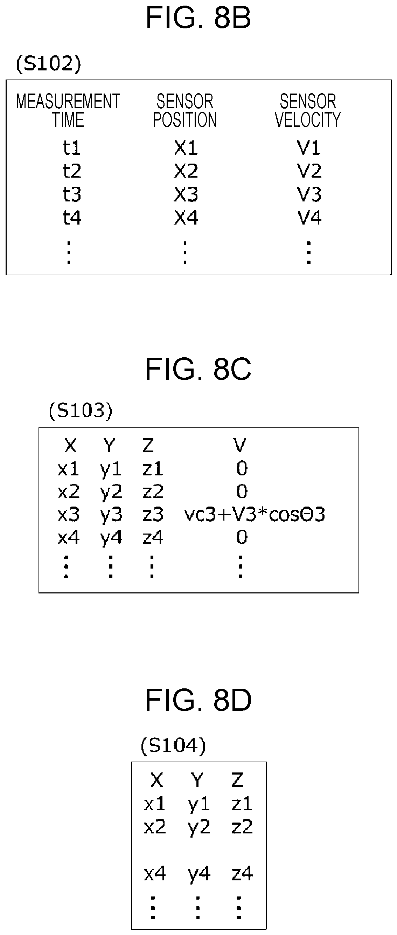

Fig. 8B is a diagram illustrating an example of the format of data acquired in step S102, the data including position information and velocity information about the sensor 200. In this example, the processing circuit 130 acquires, from the storage device 120, information about the position and velocity of the sensor 200 at the measurement time of each measurement point. The position information about the sensor 200 may include three-dimensional positional coordinate values expressed in a global coordinate system fixed to Earth, for example. The velocity information about the sensor 200 may include three-dimensional velocity values expressed in the global coordinate system, or include only velocity magnitude values. In the case in which the velocity information includes only velocity magnitude values, the position information about the sensor 200 may also include information about the orientation of the sensor 200. In other words, the pose (that is, the position and orientation) and the magnitude of the velocity of the sensor 200 at each time may be recorded.

In step S103, the processing circuit 130 calculates the (three-dimensional) positional coordinates and (one-dimensional) velocity of each measurement point to generate four-dimensional (4D) point cloud data. The processing circuit 130 calculates the three-dimensional positional coordinates and velocity value of each measurement point on the basis of the measurement data and the position information and velocity information about the sensor 200.

Fig. 8C is a diagram illustrating an example of the data format of the four-dimensional point cloud data generated in step S103. The four-dimensional point cloud data in this example includes, for each measurement point, three-dimensional positional coordinate values expressed in a global coordinate system, and a velocity value. The processing circuit 130 calculates the three-dimensional positional coordinate values of each measurement point in the global coordinate system on the basis of information about the position and orientation of the sensor 200 and information about the direction and distance of the measurement point. The processing circuit 130 also calculates the velocity of each measurement point in the four-dimensional point cloud data by performing computation to remove the influence of the moving velocity of the sensor 200 from the measured velocity. As illustrated in Fig. 9, in the case in which the sensor 200 is configured such that the measured velocity $v_c$ is positive when the sensor 200 and the object are moving away from each other, the velocity v of a measurement point in the four-dimensional point cloud data is expressed by the following formula.

$$v = (v_c + V{\cdot}\cos \Theta) / \cos \theta$$

However, since θ is unknown, the processing circuit 130 calculates $v_c$ + V·cos Θ (= v·cos θ) as the velocity of the measurement point. Fig. 8C illustrates an example in which only the velocity of the third measurement point has a value that is not 0. Note that, as with formula (5) above, the sensor 200 may also be configured such that the measured velocity $v_c$ takes a positive value when the sensor 200 and the measurement point 30 are moving toward each other. In this case, the processing circuit 130 may calculate $v_c$ - V·cos Θ (= -v·cos θ), for example, as the velocity of the measurement point.

By repeating the above computation for each measurement point, the processing circuit 130 generates four-dimensional point cloud data in which the velocity value is added to the three-dimensional coordinate values of each measurement point.

In step S104, the processing circuit 130 generates three-dimensional point cloud data by removing, from the four-dimensional point cloud data, information about measurement points for which the magnitude of the velocity exceeds a predetermined threshold value close to 0. Measurement points for which the magnitude of the velocity exceeds a threshold value in the four-dimensional point cloud data are thought to be measurement points on a moving object. Accordingly, the processing circuit 130 generates three-dimensional point cloud data in which information about such measurement points has been excluded from the four-dimensional point cloud data. Fig. 8D illustrates an example of the three-dimensional point cloud data. In this example, since only the third measurement point has a velocity value exceeding the threshold value, the information about that measurement point is excluded to generate the three-dimensional point cloud data.

In step S105, the processing circuit 130 generates or updates a map for automated travel of the moving body on the basis of the three-dimensional point cloud data generated in step S 104. The processing circuit 130 can generate or update the map by partially matching and stitching together point cloud data based on measurement data acquired at different timings. A SLAM algorithm, for example, may be used to generate or update the map.

By repeating the above operations, the processing circuit 130 can generate three-dimensional point cloud data and map data from which information about measurement points on a moving object has been removed. According to the present embodiment, since the sensor 200 can acquire velocity information about measurement points, the processing circuit 130 can quickly determine, on the basis of the velocity information, whether a measurement point is a measurement point on a stationary object or a measurement point on a moving object. This allows for a reduction in the time required for processing as compared to the technology of the related art, in which optical flows are detected and a moving object is detected by comparing frames in a time-series image acquired by a camera. Furthermore, by using an FMCW-LiDAR as the sensor 200, moving objects and stationary objects can be recognized with high accuracy, without performing processing such as feature point extraction. As a result, a highly accurate map to be used for localization of a moving body can be generated efficiently.

In the present embodiment, the sensor 200 that emits a light beam to acquire information about the distance and velocity of each measurement point is used, and data from multiple measurement points arranged in a time series is grouped together in certain units and processed as frames. Accordingly, the processing circuit 130 can process data for measurement points more efficiently than in the case where measurement data is acquired from the storage device 120 and processed one point at a time.

[4. Modification of operations by data processing device]

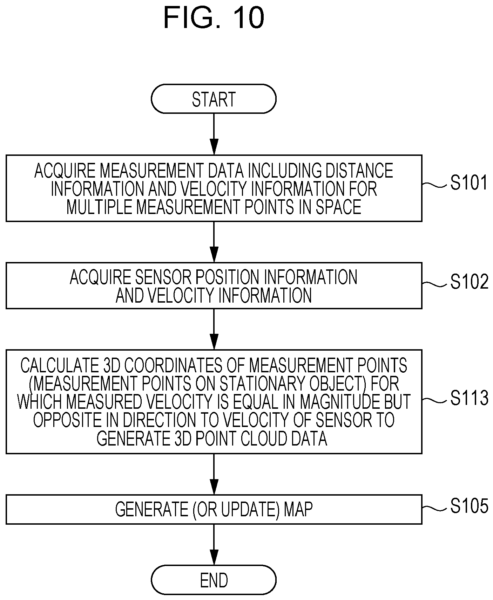

In the example in Fig. 7, the processing circuit 130 generates four-dimensional data including three-dimensional positional coordinates and a velocity value for each measurement point, and generates three-dimensional point cloud data by removing, from the four-dimensional point cloud data, information about measurement points for which the magnitude of the velocity exceeds a predetermined threshold value. Instead of such operations, the operations illustrated in Fig. 10 may be adopted.

Fig. 10 is a flowchart illustrating a modification of operations by the processing circuit 130. In the flowchart illustrated in Fig. 10, steps S103 and S104 in the flowchart illustrated in Fig. 7 have been replaced with step S113. The operations in steps S101, S102, and S105 are the same as the example in Fig. 7.

In step S113, the processing circuit 130 generates three-dimensional point cloud data by calculating the three-dimensional coordinates of measurement points for which the magnitude of the measured velocity is the same as the magnitude of the velocity of the sensor 200 but the orientation of the measured velocity is the opposite of the orientation of the sensor 200. Measurement points for which the magnitude of the measured velocity is the same as the magnitude of the velocity of the sensor 200 but the orientation of the measured velocity is the opposite of the orientation of the sensor 200 are thought to be measurement points on a stationary object, and all other measurement points are thought to be measurement points on a moving object. Accordingly, the processing circuit 130 calculates three-dimensional coordinates only for measurement points thought to be measurement points on a stationary object. The three-dimensional coordinates of a measurement point are calculated on the basis of information about the direction and distance of the measurement point and information about the position and orientation of the sensor 200. Thus, three-dimensional point cloud data from which information about measurement points on a moving object has been excluded (see Fig. 8D) can be generated in a manner similar to the example in Fig. 7.

As in the present embodiment, with measurement using an FMCW-LiDAR, the velocity component of a measurement point in the direction along a straight line connecting the light emission point of the sensor 200 and the measurement point is detected. For this reason, the velocity cannot be detected in cases where the measurement point is moving in the direction orthogonal to the straight line. Such cases are rare, but to avoid them, the position and orientation of the sensor 200 may be varied to measure a neighboring point multiple times. By measuring multiple times in different measurement directions (or measurement angles), the velocity (or whether a measurement point is moving or not) can be detected with certainty, even at measurement points for which the velocity is not detected in a single measurement.

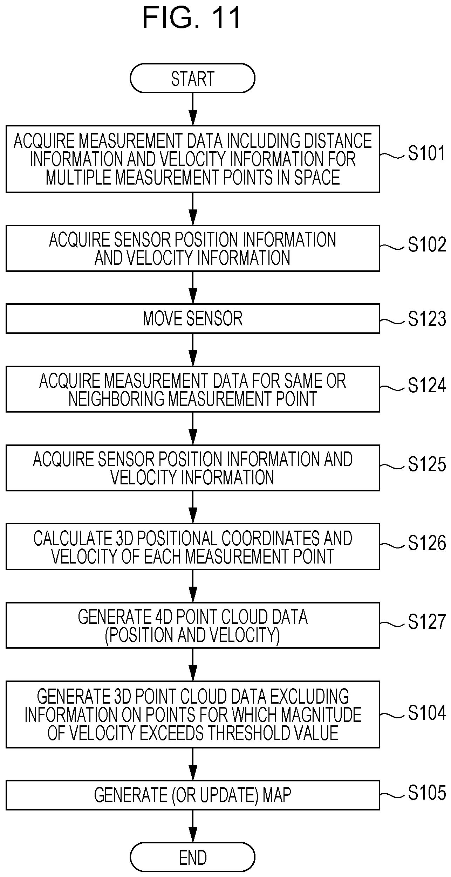

Fig. 11 is a flowchart illustrating an example of operations when measuring the same or a neighboring point multiple times. In the flowchart, step S103 in the flowchart illustrated in Fig. 7 has been replaced with steps S123 to S127. The operations in steps S101, S102, S104, and S105 are the same as the operations in the corresponding steps in Fig. 7. In the example in Fig. 11, the acquisition of measurement data for multiple measurement points in a space is executed twice by changing the position and orientation of the sensor 200.

After the operations in steps S101 and S102, the processing circuit 130 moves the sensor 200 (step S123). At this time, the position and orientation of the sensor 200 are changed so that the area to be measured roughly overlaps with the area measured the first time. In this example, the system is provided with an actuator to change the position and orientation of the sensor 200.

In step S124, the processing circuit 130 causes the sensor 200 to measure the same point or a nearby point to a measurement point in the measurement data acquired in step S101, and acquires measurement data.

In step S125, the processing circuit 130 acquires position information and velocity information about the sensor 200 at the measurement time of each measurement point. This operation is similar to the operation in step S102.

In step S126, the processing circuit 130 calculates three-dimensional positional coordinates and the velocity of each measurement point in the measurement data acquired in steps S101 and S124. The method for calculating positional coordinates and velocity is the same as the method in step S103 illustrated in Fig. 7.

In step S127, the processing circuit 130 generates four-dimensional point cloud data on the basis of the three-dimensional positional coordinates and the velocity of each measurement point calculated in step S126. At this time, if two velocity values have been obtained for substantially the same measurement point, the velocity value with the greater absolute value is processed as the velocity of the measurement point. For example, if the absolute value of the velocity is at or near zero in one of two measurements and the absolute value of the velocity is larger than zero in the other of the two measurements for substantially the same point, the processing circuit 130 obtains the latter velocity as the velocity of the measurement point to generate four-dimensional point cloud data.

Through such operations, velocity information can be acquired with certainty, even at measurement points where the velocity is incorrectly measured as zero in the first measurement. Note that the number of times to move the sensor 200 and take measurements is not limited to two times, and may also be three or more times. Also, an operation similar to step S113 illustrated in Fig. 10 may be performed instead of the operations in steps S126, S127, and S104. In this case, the processing circuit 130 generates three-dimensional point cloud data in which the measurement points on a stationary object are only those measurement points for which the measured velocity is equal in magnitude but opposite in orientation to the velocity of the sensor 200 in all of multiple measurements.

In the example in Fig. 11, the measurement of multiple measurement points is performed continuously in each of steps S101 and S124, but it is also possible to measure only a single measurement point in each step. In this case, the operations from step S101 to step S125 may be repeated a number of times equal to a predetermined number of measurement points while moving the sensor 200.

Instead of moving the sensor 200, multiple sensors 200 disposed at different positions may be used to achieve a similar function. In this case, by performing a process similar to the above on the basis of measurement data acquired at different measurement angles by the multiple sensors 200, the processing circuit 130 can generate three-dimensional point cloud data from which information about measurement points on a moving object has been removed.

In each of the above examples, the processing circuit 130 generates three-dimensional point cloud data from which position information about measurement points for which the magnitude of the velocity exceeds a threshold value (hereinafter referred to as "velocity-detected points") has been excluded. Instead of such operations, point cloud data may also be generated to include information on a flag indicating a velocity-detected point, without excluding position information about velocity-detected points.

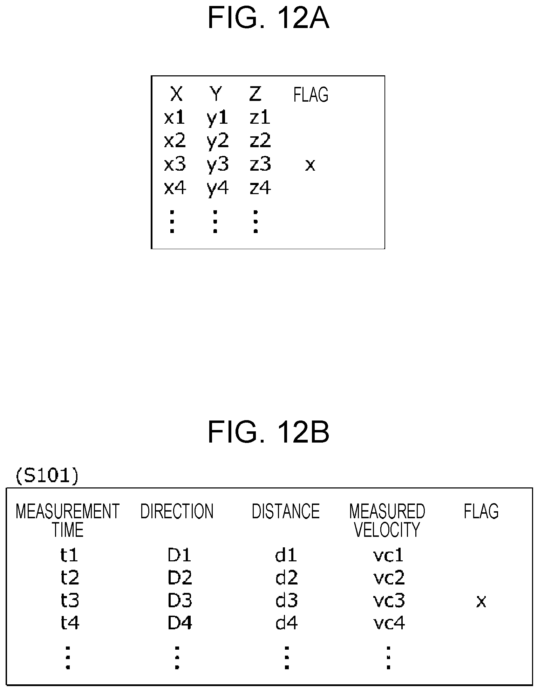

Fig. 12A illustrates an example of the format of point cloud data including information on a flag indicating a velocity-detected point. Adding a flag in this way can facilitate recalculation when the same point is measured multiple times as in the example in Fig. 11, and also allow for easy understanding of points to be measured with scrutiny in a map update process described later. Note that in this example, a flag is added to a measurement point on a moving object, but conversely, a flag may be added to a measurement point on a stationary object.

A similarly flag may also be included in the measurement data. For example, as illustrated in Fig. 12B, the measurement data outputted from the sensor 200 may include a flag indicating whether or not the magnitude of the measured velocity is greater than a threshold value (for example, zero or a predetermined positive value close to zero). In the example in Fig. 12B, a flag is added to a measurement point on a moving object, but conversely, a flag may be added to a measurement point on a stationary object. The processing circuit 240 of the sensor 200 determines whether or not to include such a flag in the velocity information on the basis of the magnitude of the measured velocity. The processing circuit 240 may include only the flag information as the velocity information, without including information about the measured velocity in the measurement data. In this case, too, the processing circuit 130 in the data processing device 100 can use the flag as a basis for recognizing measurement points on a stationary object and measurement points on a moving object from among multiple measurement points.

[5. Self-driving vehicle]

The following describes an embodiment of a self-driving vehicle that uses the data processing method described above to travel while performing localization.

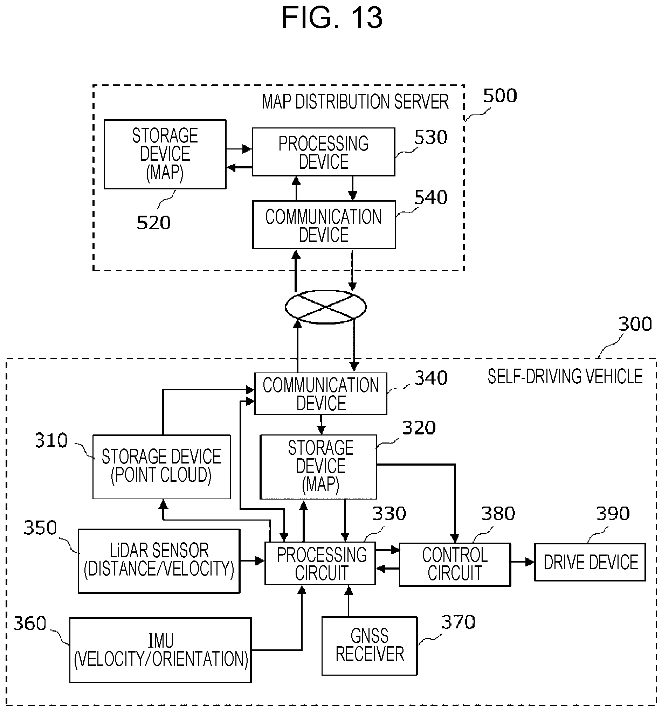

Fig. 13 is a block diagram illustrating an example configuration of a self-driving vehicle 300. Fig. 13 also illustrates a map distribution server 500, which is an element external to the vehicle 300. The vehicle 300 is provided with a first storage device 310, a second storage device 320, a processing circuit 330, a communication device 340, a LiDAR sensor 350, an inertial measurement unit (IMU) 360, a GNSS receiver 370, a control circuit 380, and a drive device 390. The server 500 is provided with a storage device 520, a processing device 530, and a communication device 540.

In the example in Fig. 13, the first storage device 310, the second storage device 320, and the processing circuit 330 fulfill a role similar to the data processing device 100 illustrated in Fig. 1. The first storage device 310 stores point cloud data generated by the processing circuit 330. The second storage device 320 stores a map of the environment around the vehicle 300. The first storage device 310 and the second storage device 320 may be consolidated as a single storage device. The processing circuit 330 is provided with similar functions as the processing circuit 130 illustrated in Fig. 1. The LiDAR sensor 350 is provided with similar functions as the sensor 200 illustrated in Fig. 1. The communication device 340 is a device that communicates with the server 500 through a network such as the Internet or a mobile phone network, for example. The IMU 360 is a device that includes any of various sensors, such as an accelerometer, a gyroscope, and a geomagnetic sensor. The IMU 360 measures various quantities, such as the acceleration, velocity, displacement, and orientation of the vehicle 300. The GNSS receiver 370 receives signals from multiple satellites in a satellite positioning system, such as the Global Positioning System (GPS), the Quasi-Zenith Satellite System (QZSS), GLONASS, Galileo, or BeiDou, and calculates the position of the vehicle 300 on the basis of the signals. The drive device 390 includes any of various devices necessary for the travel of the vehicle 300, such as an engine, a transmission, and power steering, for example. The control circuit 380 controls operations such as the travel and steering of the vehicle 300 by controlling the drive device 390. The processing circuit 330 and the control circuit 380 may be included in an onboard computer, such as an electronic control unit (ECU), for example.

The storage device 520 in the server 500 stores a map to be distributed to the vehicle 300. The processing device 530 is a processor that distributes the map to the vehicle 300 via the communication device 540 and updates the map on the basis of information acquired from the vehicle 300. The communication device 540 is a device that communicates with the vehicle 300. Note that the server 500 may distribute the map to multiple self-driving vehicles, not just the vehicle 300 illustrated in the drawing.

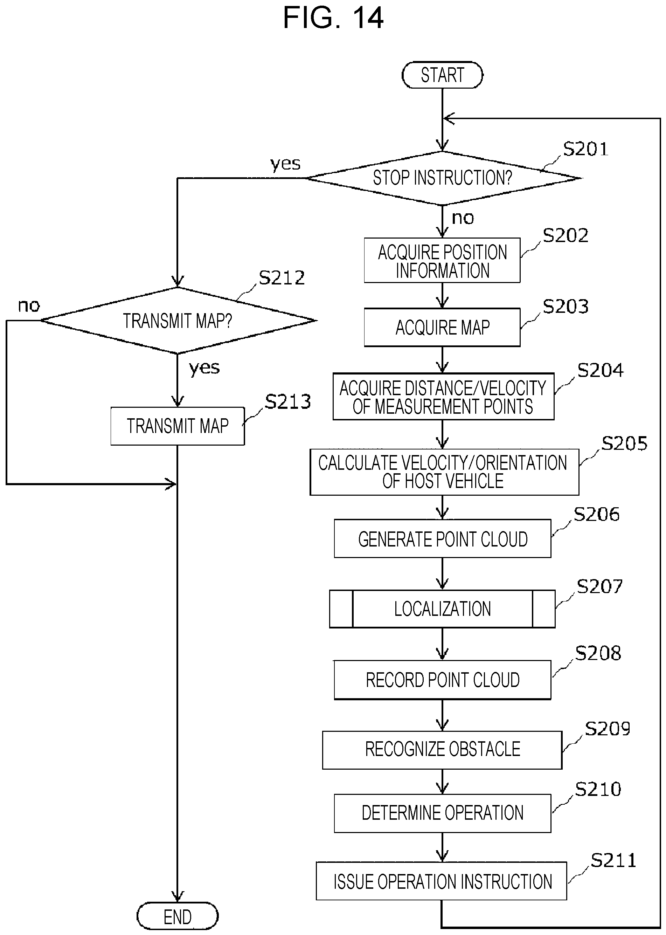

Fig. 14 is a flowchart illustrating an example of operations executed by the processing circuit 330. The processing circuit 330 executes the operations from step S201 to step S213 illustrated in Fig. 14. The following describes the operations in each step.

In step S201, the processing circuit 330 determines whether or not a self-driving stop instruction has been issued from the user or another device. If a stop instruction has been issued, the flow proceeds to step S212. If a stop instruction has not been issued, the flow proceeds to step S202.

In step S202, the processing circuit 330 acquires position information about the vehicle 300 from the GNSS receiver 370. The processing circuit 330 may correct the position information on the basis of a signal outputted from the IMU 360 in addition to the position information outputted from the GNSS receiver 370.

In step S203, the processing circuit 330 acquires, from the server 500, a map of an area including the position of the vehicle 300.

In step S204, the processing circuit 330 acquires measurement data including information about the distance and velocity of each measurement point outputted from the LiDAR sensor 350.

In step S205, the processing circuit 330 calculates the velocity and orientation of the vehicle 300 on the basis of a signal outputted from the IMU 360. The velocity of the vehicle 300 may also be acquired from another sensor, such as a speedometer.

In step S206, the processing circuit 330 generates point cloud data. The processing circuit 330 generates point cloud data on the basis of information about the distance and velocity of each measurement point acquired in step S204 and information about the velocity and orientation of the vehicle 300 acquired in step S205. The processing circuit 330 generates three-dimensional point cloud data according to the method described with reference to Fig. 7 or 10, for example. The point cloud data generated here may be, for example, three-dimensional point cloud data excluding measurement points on a moving object, as illustrated in Fig. 8D, or three-dimensional point cloud data including a flag or other information that allows for distinguishing between measurement points on a moving object and measurement points on a stationary object, as illustrated in Fig. 12A.

In step S207, the processing circuit 330 performs localization by matching the point cloud data generated in step S206 with the map data acquired in step S203. This allows the processing circuit 330 to determine the precise position and orientation (that is, pose) of the vehicle 300. Details of the operations in step S207 will be described later.

In step S208, the processing circuit 330 records the generated point cloud data in the first storage device 310.

In step S209, the processing circuit 330 recognizes an obstacle on the basis of the point cloud data. For example, an obstacle that could impede the travel of the vehicle 300 is recognized from the point cloud data according to a method such as pattern matching or machine learning.

In step S210, the processing circuit 330 determines the course of the vehicle 300 and determines operations by the vehicle 300 on the basis of the result of localization and the result of obstacle recognition. For example, when an obstacle is recognized, the processing circuit 330 determines a path on which the obstacle could be avoided, and determines parameters (such as the velocity and steering angle, for example) for causing the vehicle 300 to travel on the path.

In step S211, the processing circuit 330 sends information about the determined parameters to the control circuit 380 and issues an operation instruction to the control circuit 380. The control circuit 380 controls the drive device 390 according to the operation instruction and causes the vehicle 300 to execute desired operations. After step S211, the flow returns to step S201.

The processing circuit 330 repeats the operations in steps S201 to S211 until a self-driving stop instruction is accepted in step S201. When a stop instruction is accepted, the flow proceeds to step S212.

In step S212, the processing circuit 330 determines whether or not to transmit, to the server 500, a map updated on the basis of the point cloud data generated before the stop instruction is accepted. For example, the processing circuit 330 may determine to transmit the map when there is a change in the environment around the vehicle 300 and the map acquired from the server 500 needs to be corrected. Alternatively, the processing circuit 330 may determine to transmit the updated map upon accepting a map transmission request from the server 500 or another device. In the case of determining to transmit the map, the processing circuit 330 proceeds to step S213, whereas in the case of determining not to transmit the map, the processing circuit 330 ends the operations.

In step S213, the processing circuit 330 transmits, to the server 500, the map updated on the basis of the point cloud data generated before the stop instruction is accepted, and ends the operations.

The following describes the process of localization in step S207 in further detail.

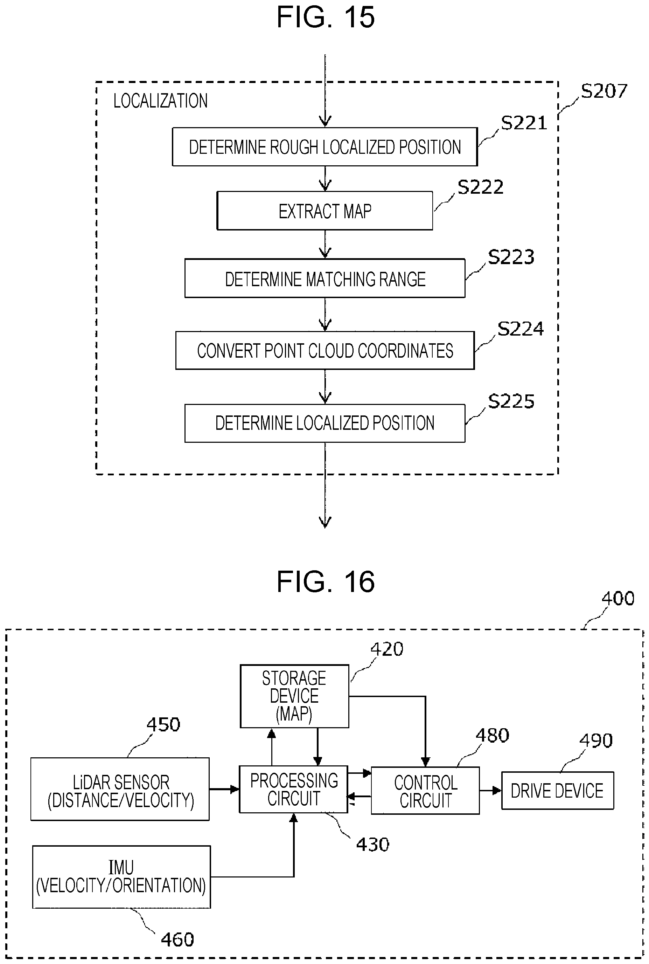

Fig. 15 is a flowchart illustrating an example of the process of localization in step S207. Step S207 includes the operations in steps S221 to S225 illustrated in Fig. 15.

In step S221, the processing circuit 330 determines a rough localized position estimated from the position of the vehicle 300 determined in the previous localization and the velocity, direction, and distance moved of the vehicle 300 in the movement up to the present localization.

In step S222, the processing circuit 330 extracts a portion of relatively narrow range, including the rough localized position, from the map acquired in step S203.

In step S223, the processing circuit 330 determines, from the extracted portion of the map, the range over which to perform matching with the point cloud data generated in step S206. For example, the processing circuit 330 determines a range of the map estimated to correspond to the distribution of the point cloud represented by the point cloud data. Note that the process in step S223 may also be omitted when a portion of the map with sufficiently narrow range is extracted in step S222.

In step S224, the processing circuit 330 performs a coordinate conversion on the point cloud data and matches the point cloud with the map. When the point cloud data includes information about measurement points on a moving object, as in the example illustrated in Fig. 12A, the processing circuit 330 performs the matching after excluding the information about measurement points on a moving object. For example, the processing circuit 330 performs the coordinate conversion on the point cloud data so that the sum of distances between measurement points in the point cloud data and points on the map is minimized. The matching algorithm is not limited to a specific algorithm, and any matching algorithm, such as iterative closest point (ICP) or normal distribution transform (NDT), for example, may be used.

In step S225, the processing circuit 330 determines the current localized position of the vehicle 300 on the basis of the result of the coordinate conversion. By using the result of the coordinate conversion as a basis for correcting the rough localized position estimated in step S221, the processing circuit 330 determines the current position and orientation of the vehicle 300 as the localized position.

According to the above operations, in step S206, point cloud data that does not include information about measurement points on a moving object is generated, or point cloud data in which measurement points on a stationary object and measurement points on a moving object are distinguishable is generated. With this arrangement, in step S207, point cloud data excluding information about measurement points on a moving object can be used to perform matching with the map data. The removal of measurement points on a moving object makes it possible to perform the comparison easily and accurately, and greatly improve the accuracy of localization.

[6. Robot cleaner]

The following describes an embodiment of a robot cleaner that uses the data processing method described above to move while performing localization.

Fig. 16 is a block diagram illustrating an example configuration of a robot cleaner 400. The robot cleaner 400 is provided with a LiDAR sensor 450, an IMU 460, a storage device 420, a processing circuit 430, a control circuit 480, and a drive device 490. The functions of these components are similar to the functions of the corresponding components in the self-driving vehicle 300 illustrated in Fig. 13. The storage device 420 and the processing circuit 430 fulfill a role similar to the data processing device 100 illustrated in Fig. 1.

The robot cleaner 400 travels automatically while simultaneously creating or updating a map and performing localization. The robot cleaner 400 is mainly used in a home. Unlike the self-driving vehicle 300 illustrated in Fig. 13, the robot cleaner 400 does not have a map created in advance. Accordingly, the robot cleaner 400 creates its own map and operates while updating the map.

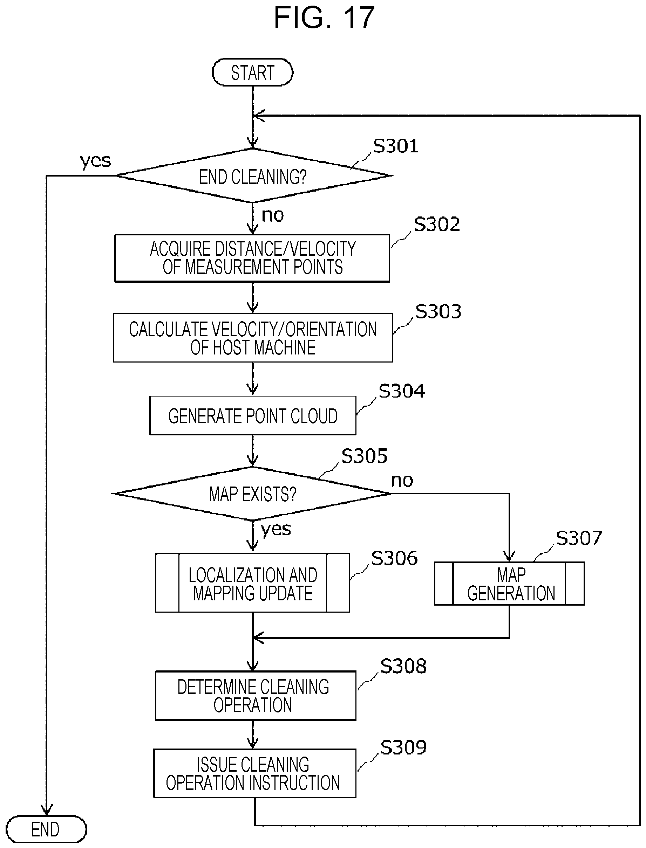

Fig. 17 is a flowchart illustrating an example of operations executed by the processing circuit 430 in the robot cleaner 400. The major differences from the operations illustrated in Fig. 14 are that the robot cleaner 400 operates by creating its own map on the basis of its own velocity and orientation and information about the distance and velocity of each measurement point acquired by the LiDAR sensor 450, and performing localization while updating the map. The processing circuit 430 executes the operations from step S301 to step S309 illustrated in Fig. 17. The following describes the operations in each step. A detailed description is omitted for points that overlap with the operations in corresponding steps in Fig. 14.

In step S301, the processing circuit 430 determines whether or not to end cleaning. For example, the processing circuit 430 ends cleaning when cleaning has been completed throughout the entirety of an area to be cleaned, or when a stop instruction is accepted from the user or an external device. In the case of continuing cleaning operations, the flow proceeds to step S302.

In step S302, the processing circuit 430 acquires measurement data including information about the distance and velocity of each measurement point outputted from the LiDAR sensor 450.

In step S303, the processing circuit 430 calculates the velocity and orientation of the robot cleaner 400 on the basis of a signal outputted from the IMU 460.

In step S304, the processing circuit 430 generates point cloud data. The processing circuit 430 generates point cloud data on the basis of information about the distance and velocity of each measurement point acquired in step S402 and information about its own velocity and orientation acquired in step S303. The processing circuit 430 generates point cloud data according to the method described with reference to Fig. 7 or 10, for example. Note that the processing circuit 430 may generate two-dimensional rather than three-dimensional point cloud data. The point cloud data generated here may be, for example, point cloud data excluding measurement points on a moving object, or point cloud data including a flag or other information that allows for distinguishing between measurement points on a moving object and measurement points on a stationary object.

In step S305, the processing circuit 430 determines whether or not a previously generated map exists. If a map exists, the flow proceeds to step S306, and if a map does not exist, the flow proceeds to step S307.

In step S306, the processing circuit 430 performs localization by matching the point cloud data with the map, and updates the map. Details of the operations in step S306 will be described later.

In step S307, the processing circuit 430 executes map generation operations. Details of the operations in step S307 will be described later.

In step S308, the processing circuit 430 determines the operation of the robot cleaner 400 on the basis of the result of localization and the map. For example, the processing circuit 430 determines a path that does not collide with a wall, obstacle, or the like indicated on the map, and determines parameters (such as the rotational velocity of each motor, for example) for causing the robot cleaner 400 to travel along the path.

In step S309, the processing circuit 430 sends information about the determined parameters to the control circuit 480 and issues an operation instruction to the control circuit 480. The control circuit 480 controls the drive device 490 according to the operation instruction and causes the robot cleaner 400 to execute cleaning operations. After step S309, the flow returns to step S301.

The processing circuit 430 repeats the operations from step S301 to step S309 until determining to end cleaning in step S301.

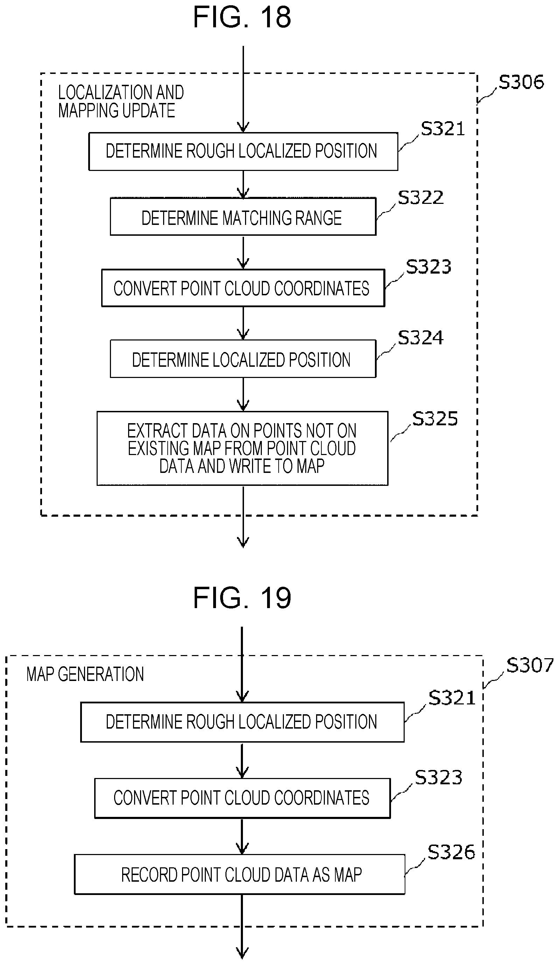

Next, the operations in steps S306 and S307 will be described in further detail with reference to Figs. 18 and 19.

Fig. 18 is a flowchart illustrating details of the operations in step S306. Step S306 includes the operations in steps S321 to S325 illustrated in Fig. 18.

In step S321, the processing circuit 430 determines a rough localized position estimated from the position of the robot cleaner 400 determined in the previous localization and the velocity, direction, and distance moved of the robot cleaner 400 in the movement up to the present localization.

In step S322, the processing circuit 430 determines, from the map, a range over which to perform matching with the point cloud data generated in step S304. For example, the processing circuit 430 determines a range of the map estimated to correspond to the distribution of the point cloud represented by the point cloud data.

In step S323, the processing circuit 430 performs a coordinate conversion on the point cloud data and matches the point cloud with the map. This operation is similar to the operation in step S224 in Fig. 15.

In step S324, the processing circuit 430 determines the current localized position of the robot cleaner 400 on the basis of the result of the coordinate conversion. This operation is similar to the operation in step S225 in Fig. 15.

In step S325, the processing circuit 430 updates the map by writing the point cloud data onto the existing map. Specifically, the processing circuit 430 extracts, from the point cloud data, points of which the coordinates do not coincide with a point on the existing map, and writes the data for the extracted points onto the existing map. At this time, if data exists for a point that exists on the existing map but is not included in the point cloud data, the data for that point may be excluded. Through the above operations, the map is updated.

Fig. 19 is a flowchart illustrating details of the operations in step S307. In the flowchart, steps S322 and S324 have been removed from the flowchart illustrated in Fig. 18, and step S325 has been replaced with step S326. The operations in steps S321 and S323 are similar to the operations in the corresponding steps illustrated in Fig. 18. In step S326, the processing circuit 430 records the coordinate-converted point cloud data to the storage device 420 directly as map data.

Through the above operations, the robot cleaner 400 can move and clean automatically while updating the map. In the present embodiment, since the point cloud data and the map are compared after first removing information about measurement points on a moving object from the point cloud data, localization and map updating can be performed easily and accurately.

In the present embodiment, the processing circuit 430 generates map data on the basis of point cloud data from which information about measurement points on a moving object has been excluded, but information about measurement points on a moving object may also be included in the map data. For example, the processing circuit 430 may generate map data with a flag that allows each measurement point to be recognized as a point on a moving object or a point on a stationary object, similarly to the point cloud data illustrated in Fig. 12A. Generating such map data enables operations to be performed on the basis of the flag information during the next measurement, such as measuring with scrutiny the measurement points that are recognized to be measurement points on a moving object.

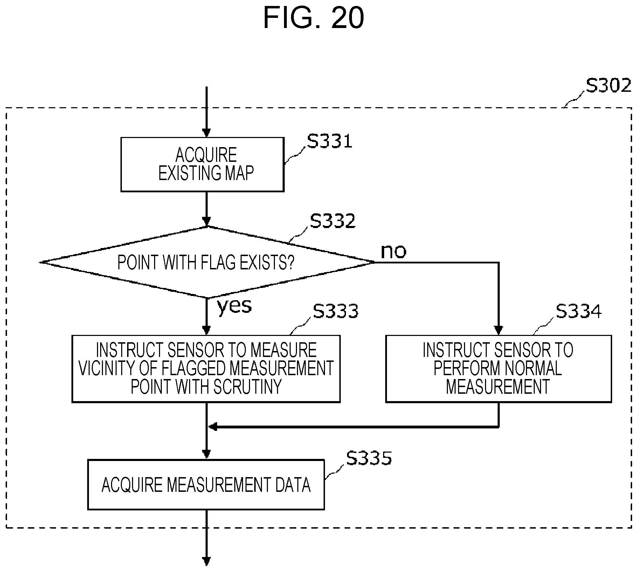

Fig. 20 is a flowchart illustrating an example of operations for measuring measurement points on a moving object with scrutiny. The flowchart illustrates an example of detailed operations in step S302 in Fig. 17. Step S302 in this example includes steps S331 to S335.

In step S331, the processing circuit 430 acquires a previously created existing map from the storage device 420. The map in this example includes information on a flag indicating that a measurement point is on a moving object when a measurement point for which the velocity is greater than a threshold value exists in the previous measurement.

In step S332, the processing circuit 430 determines whether a point with a flag is included among the points on the map. If a point with flag is included, the flow proceeds to step S333, and if a point with a flag is not included, the flow proceeds to step S334.

In step S333, the processing circuit 430 instructs the sensor 450 to measure with scrutiny an area in the vicinity of the flagged measurement point. For example, the sensor 450 is instructed to measure a flagged measurement point two or more times, or to measure the vicinity of the flagged measurement point with a higher-than-normal spatial density. Note that measurement points without a flag are measured normally.

In step S334, the processing circuit 430 performs normal measurement. Normal measurement may be, for example, measurement performed by scanning an area to be measured with a laser beam at each of predetermined angles at preset time intervals.

In step S335, the processing circuit 430 acquires the measurement data generated by the sensor 450.

Through operations like the above, measurement data for an area estimated to be a moving object is acquired with a higher temporal or spatial density. This arrangement makes it possible to fill in information about points in directions that were uncertain on the existing map due to the presence of a moving object, and a more accurate map can be generated.

The operations illustrated in Fig. 20 are not limited to the robot cleaner 400 and may also be applied to the self-driving vehicle 300 described above. For example, the operations illustrated in Fig. 20 may be executed instead of steps S203 and S204 in Fig. 14. In this case, in step S331, the processing circuit 330 acquires an existing map from the server 500, or acquires a map generated on the basis of a map acquired during a previous measurement and point cloud data. The map to be acquired here may include information about flagged measurement points recognized as points on a moving object in the previous measurement. Measuring flagged measurement points with scrutiny makes it possible to fill in information about points that were unmeasured due to the presence of a moving obj ect.

Each of the above embodiments is an illustrative example, and the present disclosure is not limited to the above embodiments. For example, various features in the above embodiments may be partially combined to form new embodiments.

In the above embodiments, the data processing device is installed in a moving body that moves autonomously, but the present disclosure is not limited to such a form. The data processing device may also be installed in a fixed object such as a utility pole placed near a road, for example. The data processing device may also be a computer such as a server that communicates with a moving body equipped with a LiDAR, radar, or other sensor. In this case, the data processing device can receive, through a network, measurement data generated by the sensor of the moving body, recognize measurement points on a stationary object and measurement points on a moving object on the basis of the measurement data, and generate point cloud data and map data reflecting the recognition results.

The data processing device in the above embodiments generates point cloud data and map data by processing in real-time measurement data generated by a sensor. The data processing device is not limited to such a form, and may also generate point cloud data and map data by acquiring, after the fact, measurement data that the sensor has stored in the storage device.

Industrial Applicability

The technology of the present disclosure is applicable to uses requiring precise map creation or updating, such as localization of a moving body that moves autonomously or road infrastructure inspection.

Reference Signs List

| 100 | data processing device |
| 120 | storage device |
| 130 | processing circuit |
| 200 | sensor |
| 210 | light source |
| 211 | drive circuit |
| 212 | light-emitting element |
| 220 | interference optics |
| 221 | splitter |
| 222 | mirror |
| 223 | collimator |
| 230 | light detector |
| 240 | processing circuit |
| 250 | timing circuit |
| 300 | self-driving vehicle |
| 310, 320 | storage device |
| 330 | processing circuit |

| 340 | communication device |
| 350 | LiDAR sensor |
| 360 | IMU |
| 370 | GNSS receiver |
| 380 | control circuit |
| 390 | drive device |
| 420 | storage device |
| 430 | processing circuit |
| 450 | LiDAR sensor |
| 460 | IMU |
| 480 | control circuit |
| 490 | drive device |
| 400 | robot cleaner |
| 420 | storage device |
| 430 | processing circuit |
| 450 | LiDAR sensor |
| 460 | IMU |
| 480 | control circuit |
| 490 | drive device |
| 500 | map distribution server |
| 520 | storage device |
| 530 | processing device |
| 540 | communication device |

**Claims**

1. A data processing device comprising:

   a storage device storing measurement data, including position information and velocity information about a plurality of measurement points in a space; and
   a processing circuit, wherein the processing circuit
   acquires the measurement data from the storage device,
   recognizes measurement points on a stationary object from among the plurality of measurement points on a basis of the velocity information, and
   generates point cloud data, including the position information about the measurement points on a stationary object, on a basis of a result of the recognition.

2. The data processing device according to claim 1, wherein

   the storage device stores the measurement data for each of a plurality of frames, and
   the measurement data for each frame includes the position information and the velocity information about the plurality of measurement points in a space.

3. The data processing device according to claim 1 or 2, wherein

   the velocity information about the plurality of measurement points in the measurement data includes first velocity information and second velocity information acquired by measuring at different measurement angles, and
   the processing circuit recognizes the measurement points on a stationary object on a basis of the first velocity information and the second velocity information.

4. The data processing device according to any of claims 1 to 3, wherein the processing circuit generates the point cloud data by excluding, from the measurement data, information pertaining to measurement points other than the recognized measurement points on a stationary object.

5. The data processing device according to any of claims 1 to 3, wherein the processing circuit generates the point cloud data through processing in which, from among the plurality of measurement points in the measurement data, the recognized measurement points on a stationary object are assigned a flag indicating a stationary object, or through processing in which, from among the plurality of measurement points in the measurement data, measurement points excluding the recognized measurement points on a stationary object are assigned a flag indicating a moving object.

6. The data processing device according to any of claims 1 to 5, wherein

the position information about the plurality of measurement points in the measurement data includes three-dimensional coordinate values for each of the plurality of measurement points, and
the point cloud data is three-dimensional point cloud data including the three-dimensional coordinate values for each of the measurement points on a stationary object.

7. The data processing device according to any of claims 1 to 6, wherein, in the measurement data, the number of measurement points with the velocity information is the same as the number of measurement points with the position information.

8. The data processing device according to any of claims 1 to 7, wherein the measurement data is sensor data outputted from a sensor using a frequency-modulated continuous wave (FMCW), or data generated on a basis of the sensor data.

9. The data processing device according to claim 8, wherein

the velocity information about the plurality of measurement points includes information indicating a velocity component of the relative velocity of each of the plurality of measurement points with respect to the sensor, the velocity component being the component in the direction along a straight line connecting the sensor and each of the plurality of measurement points, and
the processing circuit recognizes, from among the plurality of measurement points, measurement points for which the magnitude of the velocity component is less than or equal to a threshold value as the measurement points on a stationary object.

10. The data processing device according to claim 8, wherein

the velocity information about the plurality of measurement points includes a flag indicating whether or not a velocity component of the relative velocity of each of the plurality of measurement points with respect to the sensor is greater than a threshold value, the velocity component being the component in the direction along a straight line connecting the sensor and each of the plurality of measurement points, and
the processing circuit recognizes the measurement points on a stationary object from among the plurality of measurement points on a basis of the flag.

11. The data processing device according to any of claims 8 to 10, wherein the processing circuit

matches the point cloud data with map data of an environment sensed by the sensor to thereby determine whether the map data needs to be updated, and
if updating is necessary, updates the map data on a basis of the point cloud data.

12. The data processing device according to any of claims 8 to 11, wherein the processing circuit

acquires map data of an environment sensed by the sensor, and
matches the point cloud data with the map data to thereby estimate the position and/or orientation of the sensor.

13. The data processing device according to any of claims 8 to 12, wherein, after recognizing a measurement point on a moving object from among the plurality of measurement points, the processing circuit causes the sensor to measure the measurement point on a moving object.

14. A system comprising:

the data processing device according to any of claims 1 to 13; and
a sensor that generates the measurement data or data for generating the measurement data.

**15.** The system according to claim 14, wherein the sensor is a LiDAR sensor of the FMCW method.

**16.** The system according to claim 14, wherein the sensor is a radar.

**17.** A data processing method to be executed by a computer, the data processing method comprising:

acquiring measurement data, including position information and velocity information about a plurality of measurement points in a space;
recognizing measurement points on a stationary object from among the plurality of measurement points on a basis of the velocity information; and
generating point cloud data, including the position information about the measurement points on a stationary object, on a basis of a result of the recognition.

**18.** A computer program causing a computer to execute a process comprising:

acquiring measurement data, including position information and velocity information about a plurality of measurement points in a space;
recognizing measurement points on a stationary object from among the plurality of measurement points on a basis of the velocity information; and
generating point cloud data, including the position information about the measurement points on a stationary object, on a basis of a result of the recognition.

# FIG. 1

SENSOR  *200*

↓ MEASUREMENT DATA

*100*

STORAGE DEVICE  *120*

↓ MEASUREMENT DATA

PROCESSING CIRCUIT  *130*

DATA INPUT

STATIONARY OBJECT RECOGNITION

POINT CLOUD DATA GENERATION

DATA OUTPUT

## FIG. 2

EP 4 418 010 A1

# FIG. 3

## FIG. 4

OBJECT

22 ⤵ ⤴ 23

200

OPTICAL
DEFLECTOR — 270

22 ⤵ ⤴ 23

220

COLLIMATOR — 223

22 ⤵ ⤴ 23

OPTICAL
CIRCULATOR — 227

23

21

22 ⤴

FIRST FIBER
SPLITTER — 225

SECOND FIBER
SPLITTER — 226

20 ⤴

24

210 — LIGHT
SOURCE

LIGHT
DETECTOR — 230

PROCESSING
CIRCUIT — 240

TIMING
CIRCUIT — 250

## FIG. 5A

$f$

REFERENCE
LIGHT

$\Delta f$

REFLECTED
LIGHT

INTERFERENCE
LIGHT

$f_{up}$

$f_{down}$

$1/f_{FMCW}$

$t$

# FIG. 5B

# FIG. 6

## FIG. 7

```
                    ┌─────────────┐
                    │    START    │
                    └──────┬──────┘
                           │
  ┌────────────────────────────────────────────────────┐
  │ ACQUIRE MEASUREMENT DATA INCLUDING DISTANCE         │
  │ INFORMATION AND VELOCITY INFORMATION FOR            │──── S101
  │ MULTIPLE MEASUREMENT POINTS IN SPACE                │
  └────────────────────────┬───────────────────────────┘
                           │
  ┌────────────────────────────────────────────────────┐
  │ ACQUIRE SENSOR POSITION INFORMATION                 │──── S102
  │ AND VELOCITY INFORMATION                            │
  └────────────────────────┬───────────────────────────┘
                           │
  ┌────────────────────────────────────────────────────┐
  │ CALCULATE 3D POSITIONAL COORDINATES AND             │
  │ VELOCITY OF EACH MEASUREMENT POINT TO               │──── S103
  │ GENERATE 4D POINT CLOUD DATA                        │
  └────────────────────────┬───────────────────────────┘
                           │
  ┌────────────────────────────────────────────────────┐
  │ GENERATE 3D POINT CLOUD DATA EXCLUDING              │
  │ INFORMATION ON POINTS FOR WHICH MAGNITUDE           │──── S104
  │ OF VELOCITY EXCEEDS THRESHOLD VALUE                 │
  └────────────────────────┬───────────────────────────┘
                           │
  ┌────────────────────────────────────────────────────┐
  │ GENERATE (OR UPDATE) MAP                            │──── S105
  └────────────────────────┬───────────────────────────┘
                           │
                    ┌──────┴──────┐
                    │     END     │
                    └─────────────┘
```

## FIG. 8A

(S101)

| MEASUREMENT TIME | DIRECTION | DISTANCE | MEASURED VELOCITY |
|---|---|---|---|
| t1 | D1 | d1 | vc1 |
| t2 | D2 | d2 | vc2 |
| t3 | D3 | d3 | vc3 |
| t4 | D4 | d4 | vc4 |
| ⋮ | ⋮ | ⋮ | ⋮ |

# FIG. 8B

(S102)

| MEASUREMENT TIME | SENSOR POSITION | SENSOR VELOCITY |
|---|---|---|
| t1 | X1 | V1 |
| t2 | X2 | V2 |
| t3 | X3 | V3 |
| t4 | X4 | V4 |
| ⋮ | ⋮ | ⋮ |

# FIG. 8C

(S103)

| X | Y | Z | V |
|---|---|---|---|
| x1 | y1 | z1 | 0 |
| x2 | y2 | z2 | 0 |
| x3 | y3 | z3 | $vc3+V3*\cos\Theta3$ |
| x4 | y4 | z4 | 0 |
| ⋮ | ⋮ | ⋮ | ⋮ |

# FIG. 8D

(S104)

| X | Y | Z |
|---|---|---|
| x1 | y1 | z1 |
| x2 | y2 | z2 |
| | | |
| x4 | y4 | z4 |
| ⋮ | ⋮ | ⋮ |

# FIG. 9

BEAM DIRECTION

OBJECT

θ

v

Θ

v

200

SENSOR

30

MEASURED VELOCITY $v_c = v \cdot \cos\theta - V \cdot \cos\Theta$

# FIG. 10

```
                    ┌─────────────┐
                    │    START    │
                    └─────────────┘
                           │
                           ▼
┌──────────────────────────────────────────────┐
│ ACQUIRE MEASUREMENT DATA INCLUDING DISTANCE    │
│ INFORMATION AND VELOCITY INFORMATION FOR       │──── S101
│ MULTIPLE MEASUREMENT POINTS IN SPACE           │
└──────────────────────────────────────────────┘
                           │
                           ▼
┌──────────────────────────────────────────────┐
│ ACQUIRE SENSOR POSITION INFORMATION            │──── S102
│ AND VELOCITY INFORMATION                       │
└──────────────────────────────────────────────┘
                           │
                           ▼
┌──────────────────────────────────────────────┐
│ CALCULATE 3D COORDINATES OF MEASUREMENT POINTS │
│ (MEASUREMENT POINTS ON STATIONARY OBJECT) FOR  │
│ WHICH MEASURED VELOCITY IS EQUAL IN MAGNITUDE  │──── S113
│ BUT OPPOSITE IN DIRECTION TO VELOCITY OF       │
│ SENSOR TO GENERATE 3D POINT CLOUD DATA         │
└──────────────────────────────────────────────┘
                           │
                           ▼
┌──────────────────────────────────────────────┐
│ GENERATE (OR UPDATE) MAP                       │──── S105
└──────────────────────────────────────────────┘
                           │
                           ▼
                    ┌─────────────┐
                    │     END     │
                    └─────────────┘
```

# FIG. 11

```
                    START

ACQUIRE MEASUREMENT DATA INCLUDING DISTANCE
INFORMATION AND VELOCITY INFORMATION FOR          S101
MULTIPLE MEASUREMENT POINTS IN SPACE

ACQUIRE SENSOR POSITION INFORMATION               S102
AND VELOCITY INFORMATION

MOVE SENSOR                                       S123

ACQUIRE MEASUREMENT DATA FOR SAME OR              S124
NEIGHBORING MEASUREMENT POINT

ACQUIRE SENSOR POSITION INFORMATION AND           S125
VELOCITY INFORMATION

CALCULATE 3D POSITIONAL COORDINATES AND           S126
VELOCITY OF EACH MEASUREMENT POINT

GENERATE 4D POINT CLOUD DATA                      S127
(POSITION AND VELOCITY)

GENERATE 3D POINT CLOUD DATA EXCLUDING
INFORMATION ON POINTS FOR WHICH MAGNITUDE         S104
OF VELOCITY EXCEEDS THRESHOLD VALUE

GENERATE (OR UPDATE) MAP                          S105

                    END
```

# FIG. 12A

| X | Y | Z | FLAG |
|---|---|---|------|
| x1 | y1 | z1 | |
| x2 | y2 | z2 | |
| x3 | y3 | z3 | x |
| x4 | y4 | z4 | |
| ⋮ | ⋮ | ⋮ | |

# FIG. 12B

(S101)

| MEASUREMENT TIME | DIRECTION | DISTANCE | MEASURED VELOCITY | FLAG |
|------------------|-----------|----------|-------------------|------|
| t1 | D1 | d1 | vc1 | |
| t2 | D2 | d2 | vc2 | |
| t3 | D3 | d3 | vc3 | x |
| t4 | D4 | d4 | vc4 | |
| ⋮ | ⋮ | ⋮ | ⋮ | |

# FIG. 13

# FIG. 14

```
                    ( START )
                        |
                        v
    yes      +---------------------+  S201
  <----------<   STOP INSTRUCTION?  >
  |          +---------------------+
  |                    | no
  |                    v
  |          +---------------------+  S202
  |          | ACQUIRE POSITION    |
  |          | INFORMATION         |
  |          +---------------------+
  v                    |
+------------------+   v
| S212             +---------------------+  S203
| +--------------+ | ACQUIRE MAP         |
no| TRANSMIT MAP?|  +---------------------+
<-<              >            |
  +--------------+            v
        | yes      +---------------------------+  S204
        v          | ACQUIRE DISTANCE/VELOCITY |
  +-------------+  | OF MEASUREMENT POINTS     |
  | TRANSMIT MAP|  +---------------------------+
  +-------------+ S213          |
        |                       v
        |         +----------------------------+  S205
        |         | CALCULATE VELOCITY/ORIENTATION |
        |         | OF HOST VEHICLE            |
        |         +----------------------------+
        |                       |
        |                       v
        |         +---------------------+  S206
        |         | GENERATE POINT CLOUD|
        |         +---------------------+
        |                       |
        |                       v
        |         +---------------------+  S207
        |         || LOCALIZATION      ||
        |         +---------------------+
        |                       |
        |                       v
        |         +---------------------+  S208
        |         | RECORD POINT CLOUD  |
        |         +---------------------+
        |                       |
        |                       v
        |         +---------------------+  S209
        |         | RECOGNIZE OBSTACLE  |
        |         +---------------------+
        |                       |
        |                       v
        |         +---------------------+  S210
        |         | DETERMINE OPERATION |
        |         +---------------------+
        |                       |
        |                       v
        |         +-----------------------------+  S211
        |         | ISSUE OPERATION INSTRUCTION |
        |         +-----------------------------+
        v
    ( END )
```

# FIG. 15

# FIG. 16

# FIG. 17

START

S301
END CLEANING?
yes
no

S302
ACQUIRE DISTANCE/VELOCITY
OF MEASUREMENT POINTS

S303
CALCULATE VELOCITY/ORIENTATION
OF HOST MACHINE

S304
GENERATE POINT CLOUD

S305
MAP EXISTS?
no
yes

S306
LOCALIZATION AND
MAPPING UPDATE

S307
MAP
GENERATION

S308
DETERMINE CLEANING
OPERATION

S309
ISSUE CLEANING
OPERATION INSTRUCTION

END

# FIG. 18

```
┌ ─ ─ ─ ─ ─ ─ ─ ─ ─ ─ ─ ─ ─ ─ ─ ─ ─ ─ ─ ─ ─ ─ ─ ┐   S306
│ LOCALIZATION AND                                │
│ MAPPING UPDATE                                  │
│                                          S321   │
│     ┌─────────────────────────────────┐         │
│     │ DETERMINE ROUGH LOCALIZED POSITION │       │
│     └─────────────────────────────────┘         │
│                                          S322   │
│     ┌─────────────────────────────────┐         │
│     │     DETERMINE MATCHING RANGE      │       │
│     └─────────────────────────────────┘         │
│                                          S323   │
│     ┌─────────────────────────────────┐         │
│     │   CONVERT POINT CLOUD COORDINATES │       │
│     └─────────────────────────────────┘         │
│                                          S324   │
│     ┌─────────────────────────────────┐         │
│     │    DETERMINE LOCALIZED POSITION   │       │
│     └─────────────────────────────────┘         │
│                                          S325   │
│     ┌─────────────────────────────────┐         │
│     │  EXTRACT DATA ON POINTS NOT ON    │       │
│     │  EXISTING MAP FROM POINT CLOUD    │       │
│     │  DATA AND WRITE TO MAP            │       │
│     └─────────────────────────────────┘         │
└ ─ ─ ─ ─ ─ ─ ─ ─ ─ ─ ─ ─ ─ ─ ─ ─ ─ ─ ─ ─ ─ ─ ─ ┘
```

# FIG. 19

```
┌ ─ ─ ─ ─ ─ ─ ─ ─ ─ ─ ─ ─ ─ ─ ─ ─ ─ ─ ─ ─ ─ ─ ─ ┐   S307
│ MAP GENERATION                                  │
│                                          S321   │
│     ┌─────────────────────────────────┐         │
│     │ DETERMINE ROUGH LOCALIZED POSITION │       │
│     └─────────────────────────────────┘         │
│                                          S323   │
│     ┌─────────────────────────────────┐         │
│     │   CONVERT POINT CLOUD COORDINATES │       │
│     └─────────────────────────────────┘         │
│                                          S326   │
│     ┌─────────────────────────────────┐         │
│     │    RECORD POINT CLOUD DATA AS MAP │       │
│     └─────────────────────────────────┘         │
└ ─ ─ ─ ─ ─ ─ ─ ─ ─ ─ ─ ─ ─ ─ ─ ─ ─ ─ ─ ─ ─ ─ ─ ┘
```

# FIG. 20

S302

ACQUIRE
EXISTING MAP — S331

S332

POINT WITH FLAG EXISTS? — no

yes — S333

INSTRUCT SENSOR TO MEASURE
VICINITY OF FLAGGED MEASUREMENT
POINT WITH SCRUTINY

INSTRUCT SENSOR TO
PERFORM NORMAL
MEASUREMENT — S334

ACQUIRE MEASUREMENT DATA — S335

## INTERNATIONAL SEARCH REPORT

| International application No. |
| --- |
| **PCT/JP2022/021170** |

**A. CLASSIFICATION OF SUBJECT MATTER**

*G01S 13/536*(2006.01)i; *G01S 13/89*(2006.01)i; *G01S 17/34*(2020.01)i; *G01S 17/89*(2020.01)i
FI:　G01S17/89; G01S17/34; G01S13/89; G01S13/536

According to International Patent Classification (IPC) or to both national classification and IPC

**B. FIELDS SEARCHED**

Minimum documentation searched (classification system followed by classification symbols)
　　　G01S7/00-G01S7/51; G01S13/00-G01S13/95; G01S17/00-G01S17/95

Documentation searched other than minimum documentation to the extent that such documents are included in the fields searched

　　　Published examined utility model applications of Japan 1922-1996
　　　Published unexamined utility model applications of Japan 1971-2022
　　　Registered utility model specifications of Japan 1996-2022
　　　Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2019/0178998 A1 (OUSTER INC.) 13 June 2019 (2019-06-13) paragraphs [0051]-[0184], fig. 1-7 | 1-7, 14, 16-18 |
| Y | paragraphs [0051]-[0184], fig. 1-7 | 8-13, 15 |
| Y | JP 2020-67315 A (MITSUBISHI ELECTRIC CORP.) 30 April 2020 (2020-04-30) paragraph [0085] | 8-13, 15 |
| A | CN 113256595 A (FARTI BEIJING TECH CO., LTD.) 13 August 2021 (2021-08-13) entire text, all drawings | 1-18 |
| A | JP 2021-103482 A (AUTOMOTIVE RESEARCH & TESTING CENTER) 15 July 2021 (2021-07-15) entire text, all drawings | 1-18 |
| A | WO 2021/079885 A1 (DENSO CORP.) 29 April 2021 (2021-04-29) entire text, all drawings | 1-18 |
| A | JP 2019-28861 A (SONY CORP.) 21 February 2019 (2019-02-21) entire text, all drawings | 1-18 |

☑ Further documents are listed in the continuation of Box C.　　☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **29 July 2022** | **09 August 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/021170**

**C.    DOCUMENTS CONSIDERED TO BE RELEVANT**

| Category* | Citation of document, with indication, where appropriate, of the relevant passages | Relevant to claim No. |
|---|---|---|
| A | JP 2014-203429 A (TOYOTA MOTOR CORP.) 27 October 2014 (2014-10-27) entire text, all drawings | 1-18 |

Form PCT/ISA/210 (second sheet) (January 2015)

**INTERNATIONAL SEARCH REPORT**
Information on patent family members

International application No.

**PCT/JP2022/021170**

| Patent document cited in search report | | | Publication date (day/month/year) | Patent family member(s) | | | Publication date (day/month/year) |
|---|---|---|---|---|---|---|---|
| US | 2019/0178998 | A1 | 13 June 2019 | WO | 2019/113531 | A1 | |
| | | | | EP | 3714291 | A1 | |
| JP | 2020-67315 | A | 30 April 2020 | US paragraph [0106] | 2020/0124729 | A1 | |
| | | | | DE | 102019216085 | A1 | |
| CN | 113256595 | A | 13 August 2021 | (Family: none) | | | |
| JP | 2021-103482 | A | 15 July 2021 | (Family: none) | | | |
| WO | 2021/079885 | A1 | 29 April 2021 | CN | 114667461 | A | |
| JP | 2019-28861 | A | 21 February 2019 | US entire text, all drawings | 2020/0209401 | A1 | |
| | | | | WO | 2019/026832 | A1 | |
| | | | | EP | 3662446 | A1 | |
| JP | 2014-203429 | A | 27 October 2014 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016126662 A

- WO 2019230720 A

**Non-patent literature cited in the description**

- **CHRISTOPHER V. POULTON et al.** Frequency-modulated Continuous-wave LIDAR Module in Silicon Photonics. *OFC2016,* 2016, vol. W4E.3